(19) **Europäisches Patentamt**
**European Patent Office**
**Office européen des brevets**

(11) **EP 3 826 357 B1**

(12) **EUROPEAN PATENT SPECIFICATION**

(45) Date of publication and mention
of the grant of the patent:
**26.04.2023 Bulletin 2023/17**

(51) International Patent Classification (IPC):
**H04W 88/08** (2009.01)   **H04W 76/12** (2018.01)
**H04W 92/20** (2009.01)

(21) Application number: **19847780.4**

(22) Date of filing: **07.08.2019**

(52) Cooperative Patent Classification (CPC):
**H04W 88/085; H04W 76/12;** H04W 92/20

(86) International application number:
**PCT/KR2019/009858**

(87) International publication number:
**WO 2020/032566 (13.02.2020 Gazette 2020/07)**

(54) **METHOD AND DEVICE FOR TRANSMITTING AND RECEIVING DATA IN WIRELESS COMMUNICATION SYSTEM**

VERFAHREN UND VORRICHTUNG ZUM SENDEN UND EMPFANGEN VON DATEN IN EINEM DRAHTLOSEN KOMMUNIKATIONSSYSTEM

PROCÉDÉ ET DISPOSITIF DE TRANSMISSION ET DE RÉCEPTION DE DONNÉES DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2018 KR 20180092060**

(43) Date of publication of application:
**26.05.2021 Bulletin 2021/21**

(73) Proprietor: **Samsung Electronics Co., Ltd.
Suwon-si 16677 (KR)**

(72) Inventors:
• **KIM, Donggun**
  **Gyeonggi-do 16677 (KR)**
• **KIM, Soenghun**
  **Gyeonggi-do 16677 (KR)**
• **JANG, Jaehyuk**
  **Gyeonggi-do 16677 (KR)**
• **TESANOVIC, Milos**
  **Gyeonggi-do 16677 (KR)**

(74) Representative: **Gulde & Partner
Patent- und Rechtsanwaltskanzlei mbB
Wallstraße 58/59
10179 Berlin (DE)**

(56) References cited:
**US-A1- 2017 006 499**

• **CATT: "Control Plane Considerations for L2 IAB Architectures", 3GPP DRAFT; R2-1809819, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Montreal, Canada; 20180702 - 20180706 22 June 2018 (2018-06-22), XP051525655, Retrieved from the Internet: URL:http://www.3gpp.org/ftp/tsg%5Fran/WG2% 5FRL2/TSGR2%5FAHs/2018%5F07%5FNR/Docs /R2%2 D1809819%2Ezip [retrieved on 2018-06-22]**
• **QUALCOMM INC (RAPPORTEUR): "CP issues for architecture group 1", 3GPP DRAFT; R2-1809011 - CP ISSUES FOR ARCH GROUP 1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Busan, South Korea; 20180521 - 20180525 25 May 2018 (2018-05-25), XP051520362, Retrieved from the Internet: URL:http://www.3gpp.org/ftp/tsg%5Fran/WG2% 5FRL2/TSGR2%5F102/Docs/R2%2D1809011%2E zip [retrieved on 2018-05-25]**

- HUAWEI: "Control plane protocols for architecture group 1", 3GPP DRAFT; R3-184347 CONTROL PLANE PROTOCOLS FOR ARCHITECTURE GROUP 1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Montreal, Canada; 20180702 - 20180706 10 July 2018 (2018-07-10), XP051530180, Retrieved from the Internet: URL:http://www.3gpp.org/ftp/tsg%5Fran/WG3%5Flu/TSGR3%5FAHGs/R3%2DAH%2D1807/Docs/R3%2 D184347%2Ezip [retrieved on 2018-07-10]
- Anonymous: "3rd Generation Partnership Project; Technical Specification Group Radio Access Network; Study on Integrated Access and Backhaul; (Release 15)", 3GPP Standard; Technical Report; 3GPP TR 38.874, vol. RAN WG2, no. V0.3.2, 21 June 2018 (2018-06-21), pages 1-39, XP051473122,
- SAMSUNG: "Discussions on user plane protocol for IAB", R3-181874, 3GPP TSG-RAN WG3 #99bis, vol. RAN WG3, 6 April 2018 (2018-04-06), pages 1-9, XP051416778, Sanya, China
- CATT: "Adapter Layer Termination for L2 IAB architecture", R3-182808, 3GPP TSG-RAN WG3 #100, vol. RAN WG3, 11 May 2018 (2018-05-11), pages 1-2, XP051526988, Busan, South Korea
- HUAWEI et al: "QoS Management of IAB nodes", R2-1810692, 3GPP TSG-RAN WG2#AH-1807, vol. RAN WG2, 22 June 2018 (2018-06-22), pages 1-5, XP051526453, Montreal, Canada

**Description**

TECHNICAL FIELD

The present disclosure relates to a method and device for transmitting and receiving data in a wireless communication system.

BACKGROUND ART

To meet the increase in demand with respect to wireless data traffic after the commercialization of 4th Generation (4G) communication systems, considerable efforts have been made to develop improved 5th Generation (5G) communication systems or pre-5G communication systems. For this reason, 5G communication systems or pre-5G communication systems are called beyond 4G network communication systems or post Long Term Evolution (LTE) systems. To achieve a high data rate, the implementation of 5G communication systems in an ultra-high frequency band (millimeter wave (mmWave)) (e.g., a 60 GHz band) is under consideration. To alleviate propagation path loss of radio waves and increase propagation distances of radio waves in a millimeter wave band, technologies for 5G communication systems, such as beamforming, massive multi-input multi-output (MIMO), full dimensional MIMO (FD-MIMO), array antenna, analog beamforming, and large-scale antenna system are being discussed. Also, in order to improve a system network for 5G communication systems, technologies, such as evolved small cell, advanced small cell, cloud radio access network (cloud RAN), ultra-dense network, Device-to-Device (D2D) communication, wireless backhaul, moving network, cooperative communication, Coordinated Multi-Points (CoMP), and reception interference cancellation, are being developed. In addition, for 5G communication systems, hybrid Frequency Shift Keying (FSK) and Quadrature Amplitude Modulation (QAM) (FQAM) and Sliding Window Superposition Coding (SWSC), which are Advanced Coding Modulation (ACM) schemes, and Filter Bank Multi-Carrier (FBMC), Non-Orthogonal Multiple Access (NOMA), and Sparse Code Multiple Access (SCMA), which are advanced access technologies, have been developed.

The Internet has evolved from a human-centered connection network, through which humans generate and consume information, to an Internet of Things (IoT) network that exchanges and processes information between distributed elements such as objects. An Internet of Everything (IoE) technology is emerging, in which a technology related to the IoT is combined with, for example, a technology for processing big data through connection with a cloud server. In order to implement the IoT, various technical components are required, such as, a sensing technique, wired/wireless communication and network infrastructures, a service interfacing technique, a security technique, etc. In recent years, techniques including a sensor network for connecting objects, Machine-to-Machine (M2M) communication, Machine Type Communication (MTC), etc., have been studied. In the IoT environment, intelligent Internet Technology (IT) services may be provided to collect and interpret data obtained from objects connected to each other, and to create new value in human life. As existing information technology (IT) techniques and various industries converge and combine with each other, the IoT may be applied to various fields, such as smart homes, smart buildings, smart cities, smart cars or connected cars, smart grids, health care, smart home appliances, high quality medical services, etc.

Various attempts are being made to apply 5G communication systems to IoT networks. For example, technologies related to sensor networks, M2M communication, MTC, etc., are implemented by using 5G communication technologies including beamforming, MIMO, array antenna, etc. The application of cloud RAN as the big data processing technology described above may be an example of convergence of 5G communication technology and IoT technology.

A prior art publication of CATT: "Control Plane Considerations for L2 IAB Architectures"; 3GPP DRAFT, R2-1809819 discloses different control-plane alternatives for integrated access backhaul IAB architecture group 1.

Further, QUALCOMM INC (RAPPORTEUR): "CP issues for architecture group 1"; 3GPP DRAFT, R2-1809011 describes requirements on protection of F1-C transport across the ON between UPF and CU-CF for IAB architecture 1b.

Additionally, HUAWEI: "Control plane protocols for architecture group 1"; 3GPP DRAFT, R3-184347 concerns a mechanism protecting F1-AP traffic over a wireless backhaul.

As it is possible to provide various services according to the development of wireless communication systems, there is a need for a method of efficiently providing the services.

DESCRIPTION OF EMBODIMENTS

SOLUTION TO PROBLEM

The invention is defined by all features present in and required by the independent claims 1 and 6 which represent embodiments of the invention. Further features of exemplary embodiments are defined in dependent claims. The subject-matter of the following description and figures, even if described or named as "embodiment(s)", "invention(s)", "aspect(s)", "example(s)" or "disclosure(s)" etc., may not or may only partly correspond to the invention as defined in the claims (e.g. due to one or more features present in and required by the independent claims which are missing in the "embodiment(s)", "invention(s)", "aspect(s)", "example(s)" or "disclosure(s)" etc., for example due to the use of expressions like "or", "skip", "skipped", "alternative", "alternatively, "may", "preferably", "optional(ly)", "can", "could", "as an/for example" etc. replacing one or more features present in and required by the independent claims and/or rendering one or more features present in and required by the independent claims as optional), and therefore may not be covered or may not be fully covered by the claimed invention, but is useful to highlight specific aspects of the claims.

BRIEF DESCRIPTION OF DRAWINGS

FIG. 1A is a diagram illustrating an architecture of a Long Term Evolution (LTE) system, according to some embodiments of the present disclosure.

FIG. 1B is a diagram illustrating a radio protocol architecture of the LTE system, according to some embodiments of the present disclosure.

FIG. 1C is a diagram illustrating an architecture of a next-generation mobile communication system, according to some embodiments of the present disclosure.

FIG. 1D is a diagram illustrating a radio protocol architecture of the next-generation mobile communication system, according to some embodiments of the present disclosure.

FIG. 1E is a diagram illustrating a network architecture supporting wireless backhaul in a next-generation mobile communication system, according to some embodiments of the present disclosure.

FIG. 1F illustrates a procedure of performing radio resource control (RRC) connection establishment when a user equipment (UE) establishes a connection with a radio node (IAB node or IAB donor) or a child radio node establishes a connection with a parent radio node (IAB node or IAB donor), in a wireless backhaul network (IAB) of a next-generation mobile communication system, according to some embodiments of the present disclosure.

FIG. 1G is a diagram illustrating a protocol layer entity that each radio node may have in a wireless communication system supporting wireless backhaul, according to some embodiments of the present disclosure.

FIG. 1H illustrates a method of managing bearers of radio nodes in the wireless communication system supporting wireless backhaul, according to some embodiments of the present disclosure.

FIG. 1I is a diagram illustrating a header and data structure that an adaptation (ADAP) layer entity may have by performing a data concatenation function when a radio node has a protocol architecture such as 1g-01, in the wireless communication system supporting wireless backhaul, according to some embodiments of the present disclosure.

FIG. 1J is a diagram illustrating a header and data structure that an ADAP layer entity may have by performing a data concatenation function when a radio node has a protocol architecture such as 1g-02, in the wireless communication system supporting wireless backhaul, according to some embodiments of the present disclosure.

FIG. 1K is a diagram illustrating an operation of a radio node using a data concatenation function, according to some embodiments of the present disclosure.

FIG. 1L illustrates an architecture of a UE or a radio node, according to some embodiments of the present disclosure.

FIG. 1M is a block diagram of a Tx/Rx point (TRP) or a radio node in the wireless communication system, according to some embodiments of the present disclosure.

FIG. 2A is a diagram illustrating an architecture of an LTE system, according to some embodiments of the present disclosure.

FIG. 2B is a diagram illustrating a radio protocol architecture of the LTE system, according to some embodiments of the present disclosure.

FIG. 2C is a diagram for describing the concept of dual connectivity, according to some embodiments of the present disclosure.

FIG. 2D is a diagram illustrating a random access procedure when asynchronous hybrid automatic repeat request (HARQ) is used for an uplink, according to some embodiments of the present disclosure.

FIG. 2E is a diagram illustrating an example of a message flow between a UE and a base station when a method of determining an uplink HARQ process identifier (ID) is used in E-UTRAN New Radio-Dual Connectivity (EN-DC), according to some embodiments of the present disclosure.

FIG. 2F is a diagram illustrating an operation sequence of a UE when a method of determining an uplink HARQ process ID is used in EN-DC.

FIG. 2G is a diagram illustrating an architecture of a UE in the wireless communication system, according to some embodiments of the present disclosure.

MODE OF DISCLOSURE

Hereinafter, an operation principle of the present disclosure will be described in detail with reference to the accompanying drawings. In describing the present disclosure, when the detailed description of the relevant known functions or configurations is determined to unnecessarily obscure the gist of the present disclosure, the detailed description thereof may be omitted. The terms as used herein are those defined by taking into account functions in the present disclosure, but the terms may vary depending on the intention of users or those of ordinary skill in the art, precedents, or the like. Therefore, the definitions should be made based on the contents throughout the specification.

For the same reason, some elements in the accompanying drawings are exaggerated, omitted, or schematically illustrated. Also, the size of each element does not entirely reflect the actual size. The same reference numerals are assigned to the same or corresponding elements in the drawings.

Effects and features of the present disclosure, and methods of achieving them will be clarified with reference to embodiments described below in detail with reference to the drawings. In this regard, the embodiments of the present disclosure may have different forms and should not be construed as being limited to the descriptions set forth herein. Rather, these embodiments are provided so that the present disclosure will be thorough and complete and will fully convey the concept of the embodiments of the present disclosure to those of ordinary skill in the art. The same reference numerals refer to the same elements throughout the specification.

It will be understood that the respective blocks of flowcharts and combinations of the flowcharts may be performed by computer program instructions. Because these computer program instructions may be embedded in a processor of a general-purpose computer, a special-purpose computer, or other programmable data processing apparatuses, the instructions executed through the processor of the computer or other programmable data processing apparatus generates modules for performing the functions described in the flowchart block(s). Because these computer program instructions may also be stored in a computer-executable or computer-readable memory that may direct the computer or other programmable data processing apparatus so as to implement functions in a particular manner, the instructions stored in the computer-executable or computer-readable memory are also capable of producing an article of manufacture containing instruction modules for performing the functions described in the flowchart block(s). Because the computer program instructions may also be embedded into the computer or other programmable data processing apparatus, the instructions for executing the computer or other programmable data processing apparatuses by generating a computer-implemented process by performing a series of operations on the computer or other programmable data processing apparatuses may provide operations for executing the functions described in the flowchart block(s).

Also, each block may represent part of a module, segment, or code that includes one or more executable instructions for executing a specified logical function(s). It should also be noted that, in some alternative implementations, the functions described in the blocks may occur out of the order noted in the drawings. For example, two blocks illustrated in succession may in fact be executed substantially concurrently, or the blocks may sometimes be executed in a reverse order, depending on the functions involved therein.

The term "module" or "-er/or" as used herein refers to a software element or a hardware element such as field programmable gate array (FPGA) or application specific integrated circuit (ASIC), and the "module" or "-er/or" performs certain functions. However, the term "module" or "-er/or" is not limited to software or hardware. The term "module" or "-er/or" may be configured in an addressable storage medium or may be configured to reproduce one or more processors. Therefore, for example, the term "module" includes elements, such as software elements, object-oriented software elements, class elements, and task elements, processes, functions, attributes, procedures, subroutines, segments of program code, drivers, firmware, microcodes, circuits, data, databases, data structures, tables, arrays, and variables. Functions provided in the elements and the "modules" or "- ers/ors" may be combined with fewer elements and "modules" or "-ers/ors", or may be separated from additional elements and "modules" or "-ers/ors." Furthermore, the elements and the "modules" or "-ers/ors" may be implemented to reproduce one or more central processing units (CPUs) in the device or secure multimedia card. Also, in embodiments of the present disclosure, the "module" or "-er/or" may include one or more processors.

In describing the present disclosure, when the detailed description of the relevant known functions or configurations is determined to unnecessarily obscure the gist of the present disclosure, the detailed description thereof may be omitted. Hereinafter, embodiments of the present disclosure will be described in detail with reference to the accompanying drawings.

The term for identifying an access node, the term referring to network entities, the term referring to messages, the term referring to an interface between network entities, the terms referring to a variety of identification information, and the like are exemplified for convenience of description. Therefore, the present disclosure is not limited to the terms to be described later, and other terms referring to entities having an equivalent technical meaning may be used.

For convenience of description, the terms and names defined in the 3rd Generation Partnership Project Long Term Evolution (3GPP LTE) standard are used herein. However, the present disclosure is not limited by the terms and names and may be equally applied to systems conforming to other standards. The term "eNB" as used in the present disclosure may be used interchangeably with the term "gNB" for convenience of description. That is, a base station described as the eNB may represent the gNB. Also, the term "terminal" may refer to not only mobile phones, NB-IoT devices, and sensors, but also other wireless communication devices.

Hereinafter, a base station assigns resources to a terminal, and may include at least one of a gNode B, an eNode B, a Node B, a BS, a radio access unit, a base station controller, or a node on a network. Examples of a terminal may include a user equipment (UE), a mobile station (MS), a cellular phone, a smartphone, a computer, a multimedia system capable of performing a communication function, or the like. Of course, the present disclosure is not limited to the above examples.

In particular, the present disclosure may be applied to 3GPP New Radio (NR) (5th Generation (5G) mobile communication standard). Also, the present disclosure may be applied to intelligent services (e.g., smart homes, smart buildings, smart cities, smart cars or connected cars, health care, digital education, retail, security and safety related services, etc.) based on 5G communication technologies and IoT related technologies. The term "eNB" as used herein may be used interchangeably with the term "gNB" for convenience of description. That is, a base station described as the eNB may represent the gNB. Also, the term "terminal" may refer to not only mobile phones, NB-IoT devices, and sensors, but also other wireless communication devices.

A wireless communication system has evolved from a system providing voice-oriented services to a broadband wireless communication system providing high speed high quality packet data services of communication standards such as High Speed Packet Access (HSPA) of 3GPP, LTE or Evolved Universal Terrestrial Radio Access (E-UTRA), LTE-A, LTE-Pro, High Rate Packet Data (HRPD) of 3GPP2, Ultra Mobile Broadband (UMB), and IEEE 802.16e.

In an LTE system as a representative example of a broadband wireless communication system, an Orthogonal Frequency Division Multiplexing (OFDM) scheme is employed in a downlink (DL), and a Single Carrier Frequency Division Multiple Access (SC-FDMA) scheme is employed in an uplink (UL). The UL refers to a radio link through which a terminal (UE or MS) transmits data or a control signal to a base station (eNode B or BS), and the DL refers to a radio link through which a base station transmits data or a control signal to a terminal. In the multiple access scheme as described above, data or control information of each user may be identified by performing assignment and operation so that time-frequency resources for carrying data or control information for each user do not overlap each other, that is, orthogonality therebetween is established.

Future communication systems after LTE, that is, 5G communication systems have to be able to freely reflect various requirements of users and service providers. Therefore, services that satisfy various requirements at the same time have to be supported. Services considered for 5G communication systems include Enhanced Mobile Broadband (eMBB), Massive Machine Type Communication (MMTC), and Ultra Reliability Low Latency Communication (URLLC).

According to some embodiments, eMBB aims to provide a data rate that is higher than that supported by LTE, LTE-A, or LTE-Pro. For example, in 5G communication systems, eMBB has to be able to provide a peak data rate of 20 Gbps in a DL and a peak data rate of 10 Gbps in an UL in terms of a single base station. Also, the 5G communication systems have to provide a peak data rate and simultaneously provide an increased user perceived data rate of the terminal. In order to satisfy such requirements, there is a need to improve various transmission and reception technologies including an improved multi-input multi-output (MIMO) transmission technology. Also, in a 2 GHz band used by current LTE, signals are transmitted using up to 20 MHz transmission bandwidth. However, 5G communication systems use a frequency bandwidth wider than 20 MHz in 3 to 6 GHz frequency bands or 6 GHz or higher frequency bands. Therefore, the data rate required by 5G communication systems may be satisfied.

At the same time, mMTC is under consideration so as to support application services such as Internet of Thing (IoT) in 5G communication systems. In order to efficiently provide IoT, mMTC needs to support access of a massive terminal in a cell, improve coverage of the terminal, improve battery time, and reduce costs of the terminal. Because IoT is attached to various sensors and various devices to provide a communication function, IoT has to be able to support a large number of terminals (e.g., 1,000,000 terminals/km$^2$) in a cell. Also, due to the nature of the service, the terminal supporting mMTC is likely to be located in a shaded area that is not covered by the cell, such as the basement of a building. Therefore, wider coverage than other services provided by the 5G communication systems may be required. The terminal supporting mMTC has to be configured as an inexpensive terminal, and it is difficult to frequently replace a battery of the terminal. Therefore, a very long battery life time such as 10 to 15 years may be required.

Finally, URLLC is a cellular-based wireless communication service used for a specific purpose (mission-critical). URLLC may be used for services used in remote control for robots or machinery, industrial automation, unmanned aerial vehicles, remote health care, emergency alerts, or the like. Therefore, communication provided by URLLC has to provide very low latency and very high reliability. For example, a service supporting URLLC has to satisfy air interface latency of less than 0.5 milliseconds and simultaneously has a packet error rate of 10$^{-5}$ or less. Therefore, for services supporting URLLC, the 5G systems have to provide a smaller transmit time interval (TTI) than other services and simultaneously require a design matter that has to allocate a wide resource in a frequency band so as to ensure reliability of a communication link.

The above-described three services considered in 5G communication systems, that is, eMBB, URLLC, and mMTC, may be multiplexed and transmitted in a single system. In this case, different transmission and reception technologies and transmission and reception parameters may be used between services so as to satisfy different requirements of the respective services. However, mMTC, URLLC, and eMBB are only examples of different service types, and the service types to which the present disclosure is applied are not limited to the above-described examples.

Also, although LTE, LTE-A, LTE Pro, or 5G (or NR, next-generation mobile communication) systems will be described below as an example, embodiments of the present disclosure may also be applicable to other communication systems having a similar technical background or channel form. Also, the present disclosure may be applicable to other communication systems through some modifications without departing from the scope of the present disclosure.

The present disclosure provides a method and device for concatenating data in a radio node when supporting a network architecture that supports wireless backhaul in a wireless communication system.

In a wireless communication system, a base station having various structures may be implemented, and various radio access technologies may be mixed. In particular, in a network architecture that supports wireless backhaul or integrated access backhaul, each radio node (IAB node or IAB donor) processes a lot of data from numerous terminals. Thus, in order for efficient transmission resource management, it is necessary to reduce header overhead for data processing.

In the present disclosure, provided is a method for bearer operation and processing data of radio nodes in a wireless communication system supporting wireless backhaul, and a method capable of reducing header overhead by proposing a function of efficiently concatenating data in radio nodes (e.g., IAB nodes) and capable of efficiently utilizing transmission resources.

In the present disclosure, provided is a function of concatenating data in an adaptation (ADAP) layer entity. In the present disclosure, provided is a method by which an ADAP layer concatenates a plurality of pieces of data by configuring headers, the method including: dividing a header into a common header and a dedicated header; including, in the common header, a common header field for the plurality of pieces of data to be concatenated; including a field in the dedicated header, the field being different for each header; and concatenating the plurality of pieces of data through the common header and the dedicated headers.

Also, in the present disclosure, provided is a method of allocating a hybrid automatic repeat request (HARQ) process identifier (ID) for parallel transmission when asynchronous HARQ is used for UL transmission in a wireless communication system.

According to an embodiment of the present disclosure, provided is a method of allocating an HARQ process ID for random access and a configured HARQ process ID for UL transmission when asynchronous HARQ is used, without collision therebetween.

According to the present disclosure, an HARQ process ID for random access and a configured HARQ process ID for UL transmission when asynchronous HARQ is used may be simultaneously transmitted while avoiding collision therebetween.

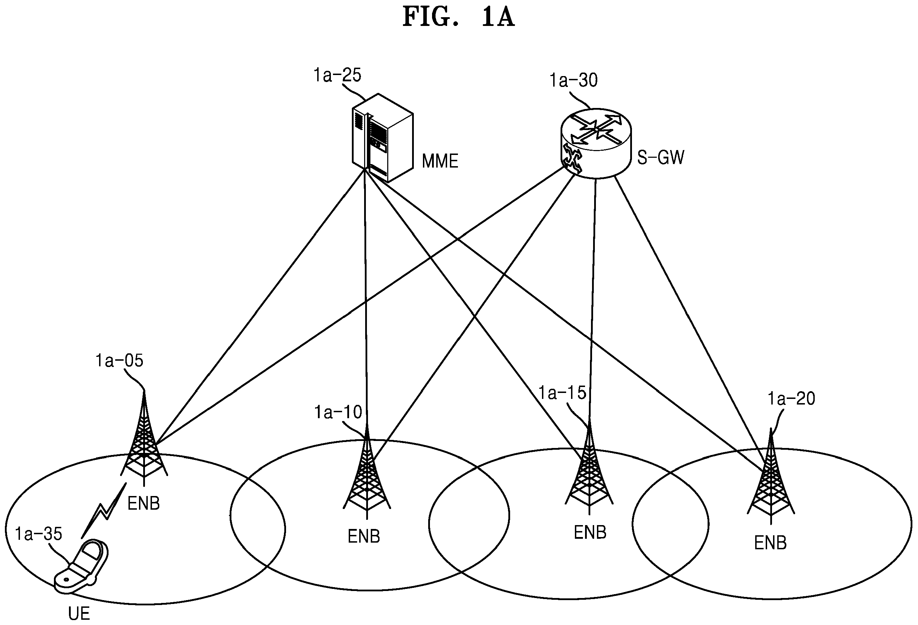

FIG. 1A is a diagram illustrating an architecture of an LTE system according to some embodiments of the present disclosure.

Referring to FIG. 1A, a radio access network of an LTE system includes next-generation base stations (Evolved Node B, hereinafter ENB, Node B, or BS) 1a-05, 1a-10, 1a-15, and 1a-20, a mobility management entity (MME) 1a-25, and a serving-gateway (S-GW) 1a- 30. A UE 1a-35 accesses an external network through the ENBs 1a-05 to 1a-20 and the S-GW 1a-30.

In FIG. 1A, the ENBs 1a-05 to 1a-20 may correspond to an existing Node B of a UMTS system. The ENB may be connected to the UE 1a-35 through a radio channel, and may perform a more complex role than the existing Node B. In the LTE system, because all user traffics including real-time services such as Voice over IP (VoIP) through an Internet protocol are serviced through a shared channel, a device for collecting and scheduling status information such as buffer status, available transmission power status, and channel status of UEs may be required. This may be handled by the ENBs 1a-05 to 1a-20. One ENB may typically control a plurality of cells. For example, in order to implement a transmission rate of 100 Mbps, the LTE system may use, for example, an OFDM scheme in a 20-MHz bandwidth as a radio access technology. Also, the ENB may apply a modulation scheme and an adaptive modulation and coding (hereinafter referred to as AMC) scheme that determines a channel coding rate according to the channel status of the UE. The S-GW 1a-30 is a device that provides data bearers, and may generate or remove data bearers under the control of the MME 1a-25. The MME is a device that is responsible for various control functions as well as mobility management functions for the UE, and may be connected to a plurality of base stations.

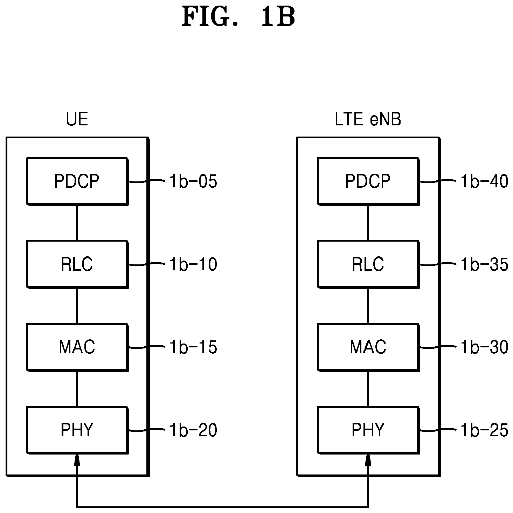

FIG. 1B is a diagram illustrating a radio protocol architecture of the LTE system, according to some embodiments of the present disclosure.

Referring to FIG. 1B, in the radio protocol of the LTE system, a UE and an ENB may respectively include packet data convergence protocols (PDCPs) 1b-05 and 1b-40, radio link controls (RLCs) 1b-10 and 1b-35, and medium access controls (MACs) 1b-15 and 1b-30. The PDCPs 1b-05 and 1b-40 may be responsible for operations such as IP header compression/decompression. The main functions of the PDCP may be summarized as follows. Of course, the present disclosure is not limited to the following examples.

- Header compression and decompression function (Header compression and decompression: ROHC only)
- User data transfer function (Transfer of user data)
- In-sequence delivery function (In-sequence delivery of upper layer PDUs at PDCP re-establishment procedure for RLC AM)
- Reordering function (For split bearers in DC (only support for RLC AM): PDCP PDU routing for transmission and PDCP PDU reordering for reception)
- Duplicate detection function (Duplicate detection of lower layer SDUs at PDCP re-establishment procedure for RLC AM)
- Retransmission function (Retransmission of PDCP SDUs at handover and, for split bearers in DC, of PDCP PDUs at PDCP data-recovery procedure, for RLC AM)
- Ciphering and deciphering function (Ciphering and deciphering)
- Timer-based SDU discard function (Timer-based SDU discard in uplink.)

According to some embodiments, the RLCs 1b-10 and 1b-35 may perform an ARQ operation by reconfiguring a PDCP packet data unit (PDU) to an appropriate size. The main functions of the RLC may be summarized as follows. Of course, the present disclosure is not limited to the following examples.

- Data transfer function (Transfer of upper layer PDUs)
- ARQ function (Error Correction through ARQ (only for AM data transfer))
- Concatenation, segmentation, and reassembly function (Concatenation, segmentation and reassembly of RLC SDUs (only for UM and AM data transfer))
- Re-segmentation function (Re-segmentation of RLC data PDUs (only for AM data transfer))
- Reordering function (Reordering of RLC data PDUs (only for UM and AM data transfer))
- Duplicate detection function (Duplicate detection (only for UM and AM data transfer))
- Error detection function (Protocol error detection (only for AM data transfer))
- RLC SDU discard function (RLC SDU discard (only for UM and AM data transfer))
- RLC re-establishment function (RLC re-establishment)

According to some embodiments, the MACs 1b-15 and 1b-30 are connected to RLC layer entities configured in one UE, and perform an operation of multiplexing RLC PDUs to MAC PDUs and demultiplexing RLC PDUs from MAC PDUs. The main functions of the MAC may be summarized as follows. Of course, the present disclosure is not limited to the following examples.

- Mapping function (Mapping between logical channels and transport channels)
- Multiplexing/demultiplexing function (Multiplexing/demultiplexing of MAC SDUs belonging to one or different logical channels into/from transport blocks (TB) delivered to/from the physical layer on transport channels)
- Scheduling information reporting function (Scheduling information reporting)
- HARQ function (Error correction through HARQ)
- Function of handling priority between logical channels (Priority handling between logical channels of one UE)
- Function of handling priority between UEs (Priority handling between UEs by means of dynamic scheduling)
- MBMS service identifying function (MBMS service identification)
- Transport format selecting function (Transport format selection)
- Padding function (Padding)

According to some embodiments, physical (PHY) layers 1b-20 and 1b-25 perform an operation of channel-coding and modulating upper layer data, making the channel-coded and modulated upper layer data into OFDM symbols, and transmitting the OFDM symbols over a radio channel, or demodulating OFDM symbols received through a radio channel, channel-decoding the demodulated OFDM symbols, and transmitting the decoded OFDM symbols to the upper layer. Of course, the present disclosure is not limited to the above examples.

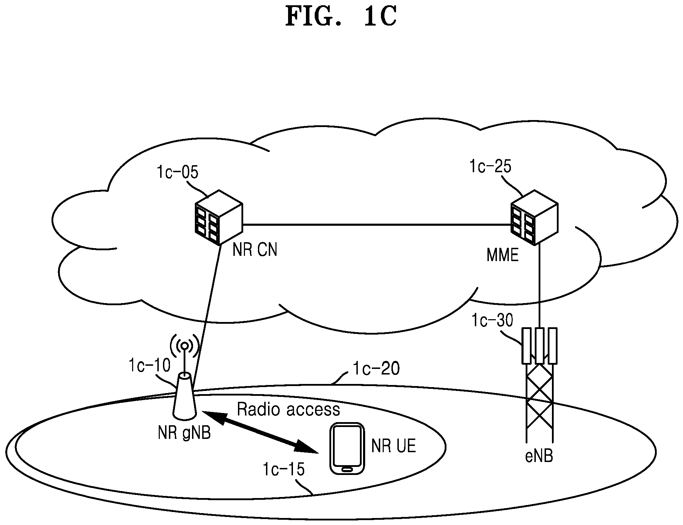

FIG. 1C is a diagram illustrating an architecture of a next-generation mobile communication system, according to some embodiments of the present disclosure.

Referring to FIG. 1C, a radio access network of a next-generation mobile communication system (hereinafter, referred to as an NR or 2g) includes a next-generation base station (New Radio Node B, hereinafter referred to as an NR gNB or an NR BS) 1c-10 and a New Radio core network (an NR CN) 1c-05. A UE (New Radio user equipment, hereinafter referred to as an NR UE or a UE) 1c-15 may access an external network through the NR gNB 1c-10 and the NR CN 1c-05.

In FIG. 1C, the NR gNB 1c-10 may correspond to an eNB of an existing LTE system. The NR gNB 1c-10 may be connected to the NR UE 1c-15 through a radio channel and may provide a service superior to that of the existing Node B. In the next-generation mobile communication system, because all user traffics are serviced through a shared channel, a device for collecting and scheduling status information such as buffer status, available transmission power status, and channel status of UEs may be required. This may be handled by the NR NB 1c-10. One NR gNB 1c-10 may typically control a plurality of cells. The next-generation mobile communication system may have more than the existing maximum bandwidth so as to implement ultra-high-speed data transmission compared to the current LTE, may use OFDM as a radio access technology, and may additionally use a beamforming technology.

Also, according to some embodiments, the NR gNB may apply a modulation scheme and an AMC scheme that determines a channel coding rate according to the channel status of the UE. The NR CN 1c-05 may perform functions such as mobility support, bearer configuration, and quality of service (QoS) configuration. The NR CN 1c-05 is a device that is responsible for various control functions as well as a mobility management function for the UE, and may be connected to a plurality of base stations. Also, the next-generation mobile communication system may interoperate with the existing LTE system, and the NR CN 1c-05 may be connected to the MME 1c-25 through a network interface. The MME 1c-25 is connected to the eNB 1c-30, which is the existing base station.

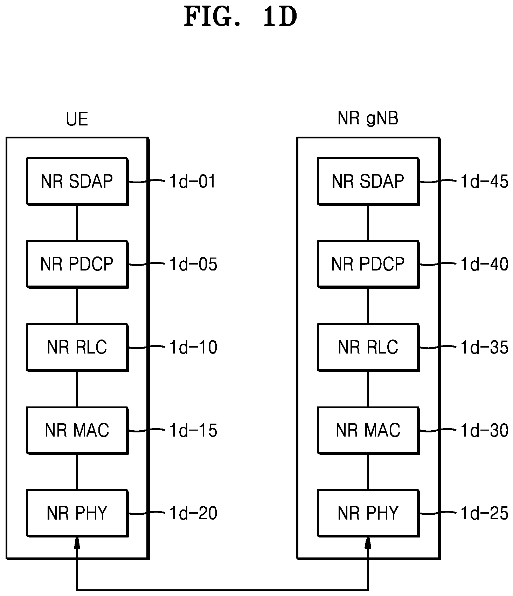

FIG. 1D is a diagram illustrating a radio protocol architecture of the next-generation mobile communication system, according to some embodiments of the present disclosure.

Referring to FIG. 1D, in the radio protocol of the next-generation mobile communication system, a UE and an NR gNB may respectively include NR service data adaptation protocols (SOAPs) 1d-01 and 1d-45, NR PDCPs 1d-05 and 1d-40, NR RLCs 1d-10 and 1d-35, and NR MACs 1d-15 and 1d-30.

- User data transfer function (transfer of user plane data)
- Function of mapping between QoS flow and data bearer for UL and DL (mapping between a QoS flow and a DRB for both DL and UL)
- Function of marking QoS flow ID in UL and DL (marking QoS flow ID in both DL and UL packets)
- Function of mapping reflective QoS flow to data bearer for UL SDAP PDUs (reflective QoS flow to DRB mapping for the UL SDAP PDUs).

According to some embodiments, in regard to the SOAP layer entity, the UE may receive an RRC message to configure whether to use the header of the SOAP layer entity or whether to use the function of the SOAP layer entity for each PDCP layer entity, for each bearer, or for each logical channel. Also, when the SOAP header of the SOAP layer entity is configured, a 1-bit non access stratum (NAS) reflective QoS indicator and a 1-bit access stratum (AS) reflective QoS indicator of the SOAP header may indicate the UE to update or reconfigure mapping information between a QoS flow and a data bearer for UL and DL. The SOAP header may include QoS flow ID information indicating QoS. QoS information may be used as data processing priority, scheduling information, etc. for supporting efficient services.

According to some embodiments, the main functions of the NR PDCPs 1d-05 and 1d-40 may include some of the following functions. Of course, the present disclosure is not limited to the following examples.

- Header compression and decompression function (Header compression and decompression: ROHC only)
- User data transfer function (Transfer of user data)
- In-sequence delivery function (In-sequence delivery of upper layer PDUs)
- Out-of-sequence delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU discard function (Timer-based SDU discard in uplink.)

According to some embodiments, the reordering function of the NR PDCP entities may include at least one of a function of reordering PDCP PDUs received from the lower layer in sequence based on a PDCP sequence number (SN), a function of immediately transmitting data to the upper layer in reordered order, without considering the order, a function of reordering PDCP PDUs and recording lost PDCP PDUs, a function of reporting the status of the lost PDCP PDUs to a sender, and a function of requesting retransmission of the lost PDCP PDUs.

According to some embodiments, the main functions of the NR RLCs 1d-10 and 1d-35 may include some of the following functions. Of course, the present disclosure is not limited to the following examples.

- Data transfer function (Transfer of upper layer PDUs)
- In-sequence delivery function (In-sequence delivery of upper layer PDUs)

- Out-of-sequence delivery function (Out-of-sequence delivery of upper layer PDUs)
- ARQ function (Error correction through ARQ)
- Concatenation, segmentation, and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC re-establishment function (RLC re-establishment)

According to some embodiments, the in-sequence delivery function of the NR RLC device may include a function of transmitting RLC SDUs received from the lower layer to the upper layer in sequence, a function of, when one RLC SDU is received after being divided into a plurality of RLC SDUs, reassembling and transmitting the RLC SDUs, and a function of reordering the received RLC PDUs based on an RLC SN or a PDCP SN, and may include at least one of a function of reordering the RLC PDUs and recording the lost RLC PDUs, a function of reporting the status of the lost RLC PDUs to the sender, a function of requesting retransmission of the lost RLC PDUs, a function of, when there is the lost RLC SDU, transmitting only RLC SDUs up to before the lost RLC SDU to the upper layer in sequence, a function of, when there is the lost RLC SDU but a certain timer has expired, transmitting all RLC SDUs received before the start of the timer to the upper layer in sequence, and a function of, when there is the lost RLC SDU and a certain timer has expired, transmitting all RLC SDUs received so far to the upper layer in sequence. Also, the NR RLC device may process RLC PDUs in the order of reception (in the order of arrival regardless of the order of sequence number) and transmit the processed RLC PDUs to the PDCP entity regardless of the order (out-of sequence delivery). When the received RLC PDU is a segment, segments stored in a buffer or to be received in the future may be received, reconfigured into one complete RLC PDU, and processed and transmitted to the PDCP entity. According to some embodiments, the NR RLC layer may not include the concatenation function, and the concatenation function may be performed by the NR MAC layer, or may be replaced with the multiplexing function of the NR MAC layer.

According to some embodiments, the out-of-sequence delivery function of the NR RLC device may include at least one of a function of transmitting RLC SDUs received from the lower layer directly to the upper layer regardless of the order, a function of, when one RLC SDU is received after being divided into a plurality of RLC SDUs, a function of reassembling and transmitting the RLC SDUs, and a function of storing the RLC SN or PDCP SN of received RLC PDUs, reordering the RLC PDUs, and recording lost RLC PDUs.

According to some embodiments, the NR MACs 1d-15 and 1d-30 may be connected to a plurality of NR RLC layer entities configured in one UE, and the main functions of the NR MAC may include some of the following functions. Of course, the present disclosure is not limited to the following examples.

- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ)
- Function of handling priority between logical channels (Priority handling between logical channels of one UE)
- Function of handling priority between UEs (Priority handling between UEs by means of dynamic scheduling)
- MBMS service identifying function (MBMS service identification)
- Transport format selecting function (Transport format selection)
- Padding function (Padding)

According to some embodiments, NR PHY layers 1d-20 and 1d-25 may perform an operation of channel-coding and modulating upper layer data, making the channel-coded and modulated upper layer data into OFDM symbols, and transmitting the OFDM symbols over a radio channel, or demodulating OFDM symbols received through a radio channel, channel-decoding the demodulated OFDM symbols, and transmitting the decoded OFDM symbols to the upper layer. Of course, the present disclosure is not limited to the following examples.

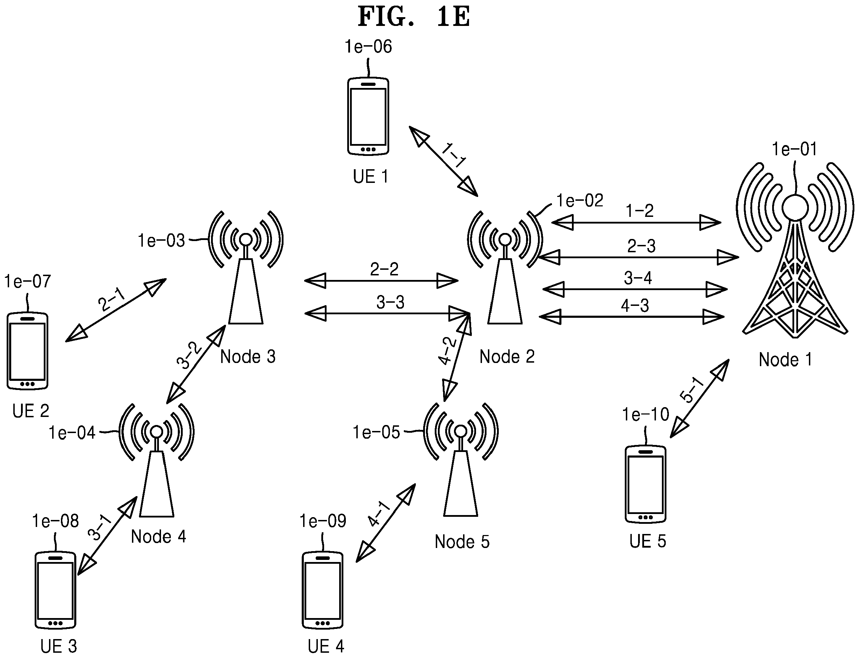

FIG. 1E is a diagram illustrating a network architecture supporting wireless backhaul in a next-generation mobile communication system, according to some embodiments of the present disclosure.

According to some embodiments, as illustrated in FIG. 1E, a wireless backhaul network (integrated access backhaul network (IAB)) may include a plurality of radio nodes (e.g., IAB nodes or IAB donors). In the wireless backhaul network, a UE may access a random radio node to establish an RRC connection and transmit and receive data. The radio nodes accessed by the UE are child IAB nodes, and may establish an RRC connection with a parent IAB node and transmit and receive data. The child radio node (child IAB node) may include a UE or an IAB node, and may include a radio node that receives, from the parent radio node (parent IAB node or IAB donor), wireless connection access configuration information, RRC configuration information, bearer configuration information, and configuration information of the PDCP, RLC, MAC, or PHY layer entity and applies the received information.

The parent radio node may include an IAB node or an IAB donor, and may include a radio node that configures, to the child node, wireless connection access configuration information, RRC configuration information, bearer configuration information, and configuration information of the PDCP, RLC, MAC, or PHY layer entity.

According to some embodiments, the IAB donor in FIG. 1E may include a radio node, such as a radio node 1 (Node 1) 1e-01, which is connected to a CN and transmits data to the upper layer entity. The IAB node may include radio nodes 2, 3, 4, and 5 (Node 2 1e-02, Node 3 1e-03, Node 4 1e-04, and Node 5 1e-05) that transmit data in the middle so as to help transmit and receive data between the UE and the IAB donor end. UEs 1e-06, 1e-07, 1e-08, and 1e-09 may access the radio nodes (e.g., IAB nodes or IAB donors) to establish an RRC connection and transmit and receive data.

For example, the UE 2 1e-07 may access the radio node 3 1e-03 to establish an RRC connection and transmit and receive data to and from the radio node 3 1e-03. The radio node 3 1e-03 may receive data received from the UE 2 1e-07 or data to be transmitted to the UE 2 1e-07 from the radio node 2 1e-02 that is the parent radio node, or may transmit the data to the radio node 2 1e-02. Also, the radio node 2 1e-02 may receive data received from the radio node 3 1e-03 or data to be transmitted to the radio node 3 1e-03 from the radio node 1 (IAB donor) 1e-01 that is the parent radio node, or may transmit the data to the radio node 1 1e-01.

Also, the UE 1 1e-03 may access the radio node 2 1e-02 to establish an RRC connection and transmit and receive data to and from the radio node 2 1e-02. The radio node 2 1e-02 may receive data received from the UE 1 1e-06 or data to be transmitted to the UE 1 1e-06 from the radio node 1 1e-01 that is the parent radio node, or may transmit the data to the radio node 1 1e-01.

The UE may access the radio node having the best signal strength to establish an RRC connection and transmit and receive data, and the wireless backhaul network may support multi-hop data transmission and reception through intermediate radio nodes so that the UE transmits data to the radio node connected to the CN and receives data from the radio node connected to the CN.

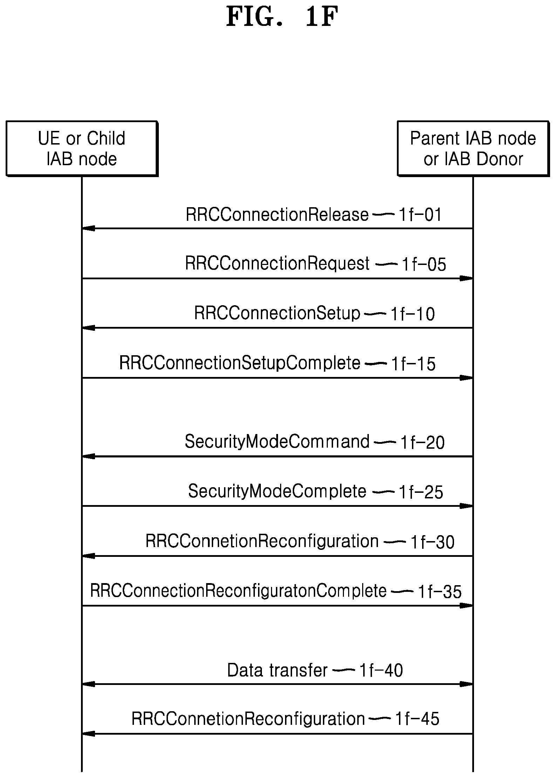

FIG. 1F illustrates a procedure of performing a radio RRC connection establishment when a UE establishes a connection with a radio node (IAB node or IAB donor) or a child radio node establishes a connection with a parent radio node (IAB node or IAB donor), in a wireless backhaul network (IAB) of a next-generation mobile communication system, according to some embodiments of the present disclosure.

According to some embodiments, referring to FIG. 1F, when the UE or the child radio node (IAB) transmitting and receiving data in an RRC connection mode does not transmit or receive data for a certain reason, or does not transmit or receive data for a certain time, the parent radio node (parent IAB node or IAB donor) transmits an RRC Connection Release message to the UE or the child radio node, so as to switch the UE or the child radio node to an RRC idle mode or an RRC inactive mode (1f-01).

According to some embodiments, in the case in which data to be transmitted and received with the parent radio node occurs, the UE or the child radio node (hereinafter referred to as an idle mode UE) performs an RRC connection establishment procedure with the parent radio node when the UE or the child radio node is in an RRC idle mode, and may perform an RRC connection resume procedure with the parent radio node when the UE or the child radio node is in an RRC inactive mode.

The UE or the child radio node may establish reverse transmission synchronization with the parent radio node through a random access process and may transmit an RRC Connection Request message (or RRC Resume Request message) to the parent radio node (1f-05). The RRC Connection Request message (or RRC Resume Request message) may include an ID of the UE or the child radio node, information about establishment cause, and the like.

The parent radio node may transmit an RRC Connection Setup message (or RRC Resume message) to the UE or the child radio node so that the UE or the child radio node may establish an RRC connection (1f-10). The RRC Connection Setup message (or RRC Resume message) may include at least one of configuration information for each logical channel, configuration information for each bearer, configuration information of the PDCP layer entity, configuration information of the RLC layer entity, and configuration information of the MAC layer entity.

According to some embodiments, when the UE or the child radio node performs handover, the RRC Connection Setup message (or RRC Resume message) may configure an indicator indicating whether to perform retransmission of pre-configured RRC messages to the target parent radio node or cell. For example, the indicator may indicate to perform retransmission of RRC messages transmitted within a certain time before a handover indication message is received, before handover is performed, or before an RRC message is received. Also, the indicator may indicate whether to perform retransmission of each of the pre-configured RRC messages, and the RRC Connection Setup message may include indicators indicating whether to perform retransmission of each of the RRC messages. Also, the indicator may indicate whether to retransmit the RRC messages in the form of a bitmap indicating each of the RRC messages.

According to some embodiments, the RRC Connection Setup message (or RRC Resume message) may include, in PDCP configuration information, an indicator instructing the UE or the radio node to perform the PDCP data recovery procedure. Also, the RRC Connection Setup message (or RRC Resume message) may include, in bearer configuration information, an indicator indicating whether to perform the PDCP data recovery procedure for a signaling radio bearer (SRB) or a data radio bearer (DRB). Also, the RRC Connection Setup message (or RRC Resume message) may include, in bearer configuration information, an indicator indicating whether to discard data remaining in the PDCP layer entity for an SRB or a DRB.

According to some embodiments, the RRC Connection Setup message (or RRC Resume message) may include, in bearer configuration information, an indicator indicating whether to perform cumulative retransmission or selective retransmission for an acknowledged mode (AM) DRB when a PDCP re-establishment procedure is performed.

According to some embodiments, the RRC Connection Setup message (or RRC Resume message) may include an indicator indicating which ARQ function is used in the child radio node. The indicator may be used to indicate whether to use a hop-by-hop ARQ function or an end-to-end ARQ function. Also, when the indicator indicates to use the end-to-end ARQ function, the indicator may indicate whether to segment the received RLC layer entity data, whether to perform only a function of transmitting data as it is, or whether to perform an ARQ function as an end in the child node. Also, the indicator may indicate which ARQ function is used as the default function. When the ARQ function is not configured in the message, the indicator may be previously determined to use one of the hop-by-hop ARQ function or the end-to-end ARQ function as the default function. Also, the RRC Connection Setup message (or RRC Resume message) may indicate whether the child radio node uses the data segmentation function. The RRC Connection Setup message may indicate whether to activate (or use) the function of each of the RLC layer entities described with reference to FIG. 1B or 1D.

According to some embodiments, the RRC Connection Setup message (or RRC Resume message) may include an indicator indicating whether to use the data concatenation function in the adaptation layer entity. Also, the RRC Connection Setup message (or RRC Resume message) may include an indicator indicating whether to configure the header of the adaptation layer entity, and the indicator may designate the type of the header. For example, the indicator may configure which information is included in the header with respect to a UE ID, a UE bearer ID, a QoS ID, a radio node ID, a radio node address, QoS information, etc., and may be configured to omit the header so as to reduce overhead.

According to some embodiments, the RRC Connection Setup message (or RRC Resume message) may configure an RLC channel to be used between the transmitting adaptation layer entity and the receiving adaptation layer entity, an RLC channel to be used between the child radio node and the parent radio node, or an RLC channel to be used in the UE and the radio node. The RRC Connection Setup message (or RRC Resume message) may configure the number of available RLC channels, available RLC channel IDs, mapping information of data mapped to RLC channels (e.g., UE IDs, UE bearer IDs, QoS information, or QoS ID mapping information). The RLC channel may be defined as a channel that groups data from the UEs based on QoS information and transmits the grouped data according to QoS, and may be defined as a channel that groups data for each UE and transmits the grouped data.

According to some embodiments, the RRC Connection Setup message (or RRC Resume message) may indicate the UE or the radio node to perform PDCP status report-based retransmission by defining and configuring an indicator indicating whether to perform PDCP status report-based retransmission in the configuration information (pdcp-config) of the PDCP layer entity. For example, when an indicator value is set to 0, data corresponding to NACK information of the PDCP status report may be checked and only data corresponding to the ACK information may be discarded, even when the UE or the radio node receives the PDCP status report. When an indicator value is set to 1, data corresponding to ACK information of the PDCP status report may be discarded and data corresponding to the NACK information may be retransmitted, even when the UE or the radio node receives the PDCP status report.

According to some embodiments, in order to indicate the UE or the radio node to perform PDCP status report-based retransmission, the RRC Connection Setup message (or RRC Resume message) may trigger a PDCP data recovery process procedure by configuring a PDCP data recovery indicator (recoverPDCP) in the configuration information (pdcp-config) of the PDCP layer entity, and may transmit the PDCP status report to the UE or the radio node together. When the UE or the radio node performs retransmission in the PDCP data recovery process, the UE or the radio node may perform selective retransmission based on a PDCP status report, not successful or unsuccessful transmission of the lower layer entity (e.g., the RLC layer entity). The UE or the radio node may perform retransmission of only data indicated as data for which successful transmission is not confirmed (NACK) in the PDCP status report.

According to some embodiments, the RRC Connection Setup message may include an indicator indicating to periodically transmit the PDCP status report, so that the PDCP status report may be periodically transmitted in the configuration information (pdcp-config) of the PDCP layer entity, and may configure a PDCP status report periodicity or a timer value. When information about the PDCP status report configuration is received, the UE or the radio node may trigger and transmit the PDCP status report according to the configured PDCP status report periodicity included in the received information or whenever the timer value expires.

According to some embodiments, the RRC Connection Setup message may configure a timer value and an indicator indicating to transmit the PDCP status report, so that the PDCP status report may be triggered and transmitted in the configuration information (pdcp-config) of the PDCP layer entity. The PDCP layer entity having received the configuration information about the PDCP status report of the UE may trigger a timer having a set timer value whenever a gap occurs in the PDCP sequence number. When the gap in the PDCP sequence number is not filled until the timer expires, or when data corresponding to the PDCP sequence number assumed to be lost does not arrive, the PDCP layer entity may trigger, configure, and transmit the PDCP status report when the timer expires. When the gap in the PDCP sequence number is filled before the timer expires, or when data corresponding to the PDCP sequence number assumed to be lost arrives, the PDCP layer entity may stop and initialize the timer. A PDCP reordering timer may be used as the timer, and a new timer having a value less than or greater than that of the PDCP reordering timer may be defined.

According to some embodiments, the RRC Connection Setup message may configure a PDCP status report prohibit timer so as to prevent the PDCP status report from being frequently triggered in the configuration information (pdcp-config) of the PDCP layer entity. When the PDCP status report prohibit timer is configured, the UE or the radio node may trigger or configure and transmit the PDCP status report and may trigger the PDCP status report prohibit timer. The RRC Connection Setup message may prevent additional PDCP status reports from being transmitted while the PDCP status report prohibit timer is running, and may allow the UE or the radio node to transmit the PDCP status report after the PDCP status report prohibit timer expires.

According to some embodiments, the RRC Connection Setup message (or separate newly defined RRC message) may include information about the parent radio node or the child radio node and information about each hop, such as a congestion level, a queuing delay, and a hop delay between radio nodes (one-hop air latency), which are useful for the radio node. Also, the number of wireless hops from the radio node having received the RRC Connection Setup message to the highest radio node (IAB donor) may be indicated to the radio node having received the RRC Connection Setup message. Also, the radio node having received the indicated number of hops through the RRC Connection Setup message may increase the number of hops by 1 and notify the child node of the number of hops.

The UE or the child radio node that has established the RRC connection may transmit an RRC Connection Setup Complete message (or RRC Resume complete message) to the parent radio node (1f-15). The RRC Connection Setup Complete message may include a control message "SERVICE REQUEST" requesting an AMF or an MME for bearer configuration for a certain service. The parent radio node may transmit the SERVICE REQUEST message included in the RRCConnetionSetupComplete message to the AMF or the MME. The AMF or the MME may determine whether to provide the service requested by the UE or the child radio node.

When the AMF or the MME determines to provide the service requested by the UE or the child radio node as a result of determining whether to provide the service, the AMF or the MME may transmit an "INITIAL CONTEXT SETUP REQUEST" message to the parent radio node. The "INITIAL CONTEXT SETUP REQUEST" message may include QoS information to be applied when the DRB is configured, security-related information (e.g., security key, security algorithm, etc.) to be applied to the DRB, and the like.

The parent radio node may exchange a Security Mode Command message 1f-20 and a Security Mode Complete message 1f-25 with the UE or the child radio node so as to configure security with the UE or the child radio node. When the security configuration is completed, the parent radio node may transmit an RRC Connection Reconfiguration message 1f-30 to the UE or the child radio node.

According to some embodiments, when the UE or the child radio node performs handover, the RRC Connection Reconfiguration message may configure an indicator indicating whether to perform retransmission of pre-configured RRC messages to the target parent radio node or cell. For example, the indicator may indicate to perform retransmission of RRC messages transmitted within a certain time before a handover indication message is received, before handover is performed, or before an RRC message is received. Also, the indicator may indicate whether to perform retransmission of each of the pre-configured RRC messages, and the RRC Connection Setup message may include indicators indicating whether to perform retransmission of each of the RRC messages. Also, the indicator may indicate whether to retransmit the RRC messages in the form of a bitmap indicating each of the RRC messages.

According to some embodiments, the RRC Connection Reconfiguration message may include, in PDCP configuration information, an indicator indicating the UE or the radio node to perform the PDCP data recovery procedure. Also, the RRC Connection Reconfiguration message may include, in bearer configuration information, an indicator indicating whether to perform the PDCP data recovery procedure for the SRB or the DRB. Also, the RRC Connection Reconfiguration message may include, in bearer configuration information, an indicator indicating whether to discard data remaining in the PDCP layer entity with respect to the SRB or the DRB.

According to some embodiments, the RRC Connection Reconfiguration message may include, in bearer configuration information, an indicator indicating whether to perform cumulative retransmission or selective retransmission for the AM DRB when the PDCP re-establishment procedure is performed.

According to some embodiments, the RRC Connection Reconfiguration message may include an indicator indicating which ARQ function is used in the child radio node. The indicator may be used to indicate whether to use a hop-by-hop ARQ function or an end-to-end ARQ function. Also, when the indicator indicates to use the end-to-end ARQ function, the indicator may indicate whether to segment the received RLC layer entity data, whether to perform only a transmitting function as it is, or whether to perform an ARQ function as an end in the child node. Also, the indicator may indicate which ARQ function is used as the default function. When the ARQ function is not configured in the message, the indicator may be previously determined to use one of the hop-by-hop ARQ function or the end-to-end ARQ function as the default function. Also, the RRC Connection Reconfiguration message may indicate whether the child radio node uses the data segmentation function. The RRC Connection Reconfiguration message may indicate whether to activate (or use) the function of each of the RLC layer entities described with reference to FIG. 1B or 1D.

According to some embodiments, the RRC Connection Reconfiguration message may include an indicator indicating whether to use the data concatenation function in the adaptation layer entity. Also, the RRC Connection Reconfiguration message may include an indicator indicating whether to configure the header of the adaptation layer, entity and the indicator may designate the type of the header. For example, the indicator may configure which information is included in the header with respect to a UE ID, a UE bearer ID, a QoS ID, a radio node ID, a radio node address, QoS information, etc., and may be configured to omit the header so as to reduce overhead.

According to some embodiments, the RRC Connection Reconfiguration message may configure an RLC channel to be used between the transmitting adaptation layer entity and the receiving adaptation layer entity, an RLC channel to be used between the child radio node and the parent radio node, or an RLC channel to be used in the UE and the radio node. The RRC Connection Reconfiguration message may configure the number of available RLC channels, available RLC channel IDs, mapping information of data mapped to RLC channels (e.g., UE IDs, UE bearer IDs, QoS information, or QoS ID mapping information). The RLC channel may be defined as a channel that groups data from the UEs based on QoS information and transmits the grouped data according to QoS, and may be defined as a channel that groups data for each UE and transmits the grouped data.

According to some embodiments, the RRC Connection Reconfiguration message may indicate the UE or the radio node to perform PDCP status report-based retransmission by defining and configuring an indicator indicating whether to perform PDCP status report-based retransmission in the configuration information (pdcp-config) of the PDCP layer entity. For example, when an indicator value is set to 0, data corresponding to NACK information of the PDCP status report may be checked and only data corresponding to the ACK information may be discarded, even when the UE or the radio node receives the PDCP status report. When an indicator value is set to 1, data corresponding to ACK information of the PDCP status report may be discarded and data corresponding to the NACK information may be retransmitted, even when the UE or the radio node receives the PDCP status report.

According to some embodiments, in order to indicate the UE or the radio node to perform PDCP status report-based retransmission, the RRC Connection Reconfiguration message may trigger a PDCP data recovery process procedure by configuring a PDCP data recovery indicator (recoverPDCP) in the configuration information (pdcp-config) of the PDCP layer entity, and may transmit the PDCP status report to the UE or the radio node together. When the UE or the radio node performs retransmission in the PDCP data recovery process, the UE or the radio node may perform selective retransmission based on a PDCP status report, not successful or unsuccessful transmission of the lower layer entity (e.g., the RLC layer entity). The UE or the radio node may perform retransmission only on data indicated as data for which successful transmission is not confirmed (NACK) in the PDCP status report.

According to some embodiments, the RRC Connection Reconfiguration message may include an indicator indicating to periodically transmit the PDCP status report, so that the PDCP status report may be periodically transmitted in the configuration information (pdcp-config) of the PDCP layer entity, and may configure a PDCP status report periodicity or a timer value. When information about the PDCP status report configuration is received, the UE or the radio node may trigger and transmit the PDCP status report according to the configured PDCP status report periodicity included in the received information or whenever the timer value expires.

According to some embodiments, the RRC Connection Reconfiguration message may configure a timer value and an indicator indicating to transmit the PDCP status report, so that the PDCP status report may be triggered and transmitted in the configuration information (pdcp-config) of the PDCP layer entity. When the PDCP layer receives the configuration information about the PDCP status report of the UE, the PDCP layer may trigger a set timer value whenever a gap occurs in the PDCP sequence number. When the timer expires, the PDCP layer entity may trigger, configure, and transmit the PDCP status report. A PDCP reordering timer may be used as the timer, and a new timer having a value less than or greater than that of the PDCP reordering timer may be defined.

According to some embodiments, the RRC Connection Reconfiguration message may configure a PDCP status report prohibit timer so as to prevent the PDCP status report from being frequently triggered in the configuration information (pdcp-config) of the PDCP layer entity. When the PDCP status report prohibit timer is configured, the UE or the radio node may trigger or configure and transmit the PDCP status report and may trigger the PDCP status report prohibit timer. The RRC Connection Reconfiguration message may prevent additional PDCP status reports from being transmitted while the PDCP status report prohibit timer is running, and may allow the UE or the radio node to transmit the PDCP status report after the PDCP status report prohibit timer expires.

According to some embodiments, the RRC Connection Reconfiguration message (or separate newly defined RRC message) may include information about the parent radio node or the child radio node and information about each hop, such as a congestion level, a queuing delay, and a hop delay between radio nodes (one-hop air latency), which are useful for the radio node. Also, the number of wireless hops from the radio node having received the RRC Connection Reconfiguration message to the highest radio node (IAB donor) may be indicated. Also, the radio node having received the indicated number of hops through the RRC Connection Reconfiguration message may increase the number of hops by 1 and notify the child node of the number of hops.

According to some embodiments, the RRC Connection Reconfiguration message may include configuration information of the DRB in which user data is to be processed, and the UE or the child radio node may configure the DRB by applying the configuration information of the DRB and transmit an RRC Connection Reconfiguration Complete message to the parent radio node (1f-35). The parent radio node that has completed DRB configuration with the UE or the child radio node may transmit an INITIAL CONTEXT SETUP COMPLETE message to the AMF or the MME and complete the connection.

When the processes 1f-01 to 1f-35 are completed, the UE or the child radio node may transmit and receive data through the parent radio node and the CN (1f-40). According to some embodiments, the data transmission process may largely include three steps: RRC connection configuration, security configuration, and DRB configuration. Also, the parent radio node may transmit an RRC Connection Reconfiguration message for a certain reason so as to perform, add, or change the RRC Connection Reconfiguration (1f-45).

According to some embodiments, when the UE or the child radio node performs handover, the RRC Connection Reconfiguration message may configure an indicator indicating whether to perform retransmission of pre-configured RRC messages to the target parent radio node or cell. For example, the indicator may indicate to perform retransmission of RRC messages transmitted within a certain time before a handover indication message is received, before handover is performed, or before an RRC message is received. Also, the indicator may indicate whether to perform retransmission of each of the pre-configured RRC messages, and the RRC Connection Setup message may include indicators indicating whether to perform retransmission of each of the RRC messages. Also, the indicator may indicate whether to retransmit the RRC messages in the form of a bitmap indicating each of the RRC messages.

According to some embodiments, the RRC Connection Reconfiguration message may include, in PDCP configuration information, an indicator indicating the UE or the radio node to perform the PDCP data recovery procedure. Also, the RRC Connection Reconfiguration message may include, in bearer configuration information, an indicator indicating whether to perform the PDCP data recovery procedure for the SRB or the DRB. Also, the RRC Connection Reconfiguration message may include, in bearer configuration information, an indicator indicating whether to discard data remaining in the PDCP layer entity with respect to the SRB or the DRB.

According to some embodiments, the RRC Connection Reconfiguration message may include, in bearer configuration information, an indicator indicating whether to perform cumulative retransmission or selective retransmission for the AM DRB when the PDCP re-establishment procedure is performed.

According to some embodiments, the RRC Connection Reconfiguration message may include an indicator indicating which ARQ function is used in the child radio node. The indicator may be used to indicate whether to use a hop-by-hop ARQ function or an end-to-end ARQ function. Also, when the indicator indicates to use the end-to-end ARQ function, the indicator may indicate whether to segment the received RLC layer entity data, whether to perform only a transmitting function as it is, or whether to perform an ARQ function as an end in the child node. Also, the indicator may indicate which ARQ function is used as the default function. When the ARQ function is not configured in the message, the indicator may be previously determined to use one of the hop-by-hop ARQ function or the end-to-end ARQ function as the default function. Also, the RRC Connection Reconfiguration message may indicate whether the child radio node uses the data segmentation function. The RRC Connection Reconfiguration message may indicate whether to activate (or use) the function of each of the RLC layer entities described with reference to FIG. 1B or 1D.

According to some embodiments, the RRC Connection Reconfiguration message may include an indicator indicating whether to use the data concatenation function in the adaptation layer entity. Also, the RRC Connection Reconfiguration message may include an indicator indicating whether to configure the header of the adaptation layer entity, and the indicator may designate the type of the header. For example, the indicator may configure which information is included in the header with respect to a UE ID, a UE bearer ID, a QoS ID, a radio node ID, a radio node address, QoS information, etc., and may be configured to omit the header so as to reduce overhead.

According to some embodiments, the RRC Connection Reconfiguration message may configure an RLC channel to be used between the transmitting adaptation layer entity and the receiving adaptation layer entity, an RLC channel to be used between the child radio node and the parent radio node, or an RLC channel to be used in the UE and the radio node. The RRC Connection Reconfiguration message may configure the number of available RLC channels, available RLC channel IDs, mapping information of data mapped to RLC channels (e.g., UE IDs, UE bearer IDs, QoS information, or QoS ID mapping information). The RLC channel may be defined as a channel that groups data from the UEs based on QoS information and transmits the grouped data according to QoS, and may be defined as a channel that groups data for each UE and transmits the grouped data.

According to some embodiments, the RRC Connection Reconfiguration message may indicate the UE or the radio node to perform PDCP status report-based retransmission by defining and configuring an indicator indicating whether to perform PDCP status report-based retransmission in the configuration information (pdcp-config) of the PDCP layer entity. For example, when an indicator value is set to 0, data corresponding to NACK information of the PDCP status report may be checked and only data corresponding to the ACK information may be discarded, even when the UE or the radio node receives the PDCP status report. When an indicator value is set to 1, data corresponding to ACK information of the PDCP status report may be discarded and data corresponding to the NACK information may be retransmitted, even when the UE or the radio node receives the PDCP status report.

According to some embodiments, in order to indicate the UE or the radio node to perform PDCP status report-based retransmission, the RRC Connection Reconfiguration message may trigger a PDCP data recovery process procedure by configuring a PDCP data recovery indicator (recoverPDCP) in the configuration information (pdcp-config) of the PDCP layer entity, and may transmit the PDCP status report to the UE or the radio node together. When the UE or the radio node performs retransmission in the PDCP data recovery process, the UE or the radio node may perform selective retransmission based on a PDCP status report, not successful or unsuccessful transmission of the lower layer entity (e.g., the RLC layer entity). The UE or the radio node may perform retransmission only on data indicated as data for which successful transmission is not confirmed (NACK) in the PDCP status report.

According to some embodiments, the RRC Connection Reconfiguration message may include an indicator indicating to periodically transmit the PDCP status report, so that the PDCP status report may be periodically transmitted in the configuration information (pdcp-config) of the PDCP layer entity, and may configure a PDCP status report periodicity or a timer value. When information about the PDCP status report configuration is received, the UE or the radio node may trigger and transmit the PDCP status report according to the configured PDCP status report periodicity included in the received information or whenever the timer value expires.

According to some embodiments, the RRC Connection Reconfiguration message may configure a timer value and an indicator indicating to transmit the PDCP status report, so that the PDCP status report may be triggered and transmitted in the configuration information (pdcp-config) of the PDCP layer entity. When the PDCP layer receives the configuration information about the PDCP status report of the UE, the PDCP layer entity may trigger a set timer value whenever a gap occurs in the PDCP sequence number. When the timer expires, the PDCP layer may trigger, configure, and transmit the PDCP status report. A PDCP reordering timer may be used as the timer, and a new timer having a value less than or greater than that of the PDCP reordering timer may be defined.

According to some embodiments, the RRC Connection Reconfiguration message may configure a PDCP status report prohibit timer so as to prevent the PDCP status report from being frequently triggered in the configuration information (pdcp-config) of the PDCP layer entity. When the PDCP status report prohibit timer is configured, the UE or the radio node may trigger or configure and transmit the PDCP status report and may trigger the PDCP status report prohibit timer. The RRC Connection Reconfiguration message may prevent additional PDCP status reports from being transmitted while the PDCP status report prohibit timer is running, and may allow the UE or the radio node to transmit the PDCP status report after the PDCP status report prohibit timer expires.

According to some embodiments, the RRC Connection Reconfiguration message (or separate newly defined RRC message) may include information about the parent radio node or the child radio node and information about each hop, such as a congestion level, a queuing delay, and a hop delay between radio nodes (one-hop air latency), which are useful for the radio node. Also, the number of wireless hops from the radio node having received the RRC Connection Reconfiguration message to the highest radio node (IAB donor) may be indicated. Also, the radio node having received the indicated number of hops through the RRC Connection Reconfiguration message may increase the number of hops by 1 and notify the child node of the number of hops.

In the present disclosure, the bearer may refer to a bearer including the SRB and the DRB, the SRB may refer to a signaling radio bearer, and the DRB may refer to a data radio bearer. Also, a UM DRB may refer to a DRB that uses an RLC layer entity operating in an unacknowledged mode (UM) mode, and an AM DRB may refer to a DRB that uses an RLC layer entity operating in an acknowledged mode (AM) mode.

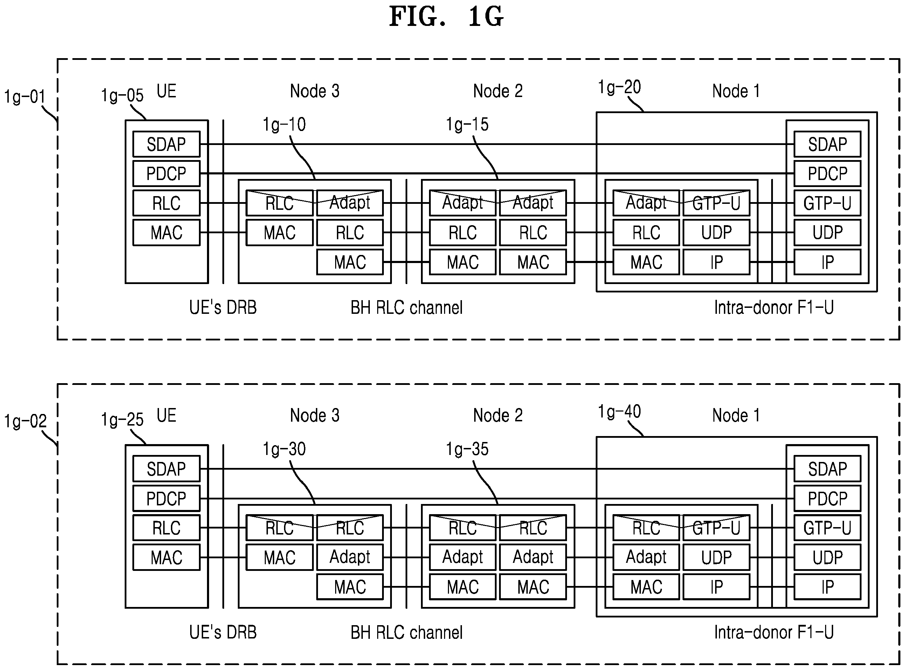

FIG. 1G is a diagram illustrating a protocol layer entity that each radio node may have in a wireless communication system supporting wireless backhaul, according to some embodiments of the present disclosure.

In FIG. 1G, the protocol layer entity architectures of radio nodes supporting wireless backhaul may be largely divided into two types. The two types may be divided according to a position of an ADAP layer entity. The protocol layer entity architectures of the radio nodes supporting wireless backhaul may include a protocol layer architecture such as 1g-01 in which the ADAP layer entity is operated above the RLC layer entity, and a protocol layer architecture such as 1g-02 in which the ADAP layer entity is operated under the RLC layer entity.

In FIG. 1G, the UE may operate, as protocol layer entities, all of a PHY layer entity, a MAC layer entity, an RLC layer entity, a PDCP layer entity, and an SOAP layer entity. Radio nodes (e.g., radio nodes that perform a wireless backhaul function to receive and transmit data between a UE and an IAB donor, i.e., Node 3 1g-10 and Node 2 1g-15) may operate a PHY layer entity, a MAC layer entity, a RLC layer entity, and an ADAP layer entity. The highest radio node (e.g., the highest node that supports wireless backhaul connected to the CN to transmit data, i.e., IAB donor and Node 1 1g-20) may operate all of a PHY layer entity, a MAC layer entity, a RLC layer entity, a PDCP layer entity, and a SDAP layer entity, and may include a central unit (CU) and a distributed unit (DU) connected by wire. Also, the CU included in the highest radio node may operate the SOAP layer entity and the PDCP layer entity, and the DU may operate the RLC layer entity, the MAC layer entity, and the PHY layer entity.

The ADAP layer entity may identify a plurality of bearers of a plurality of UEs and map the bearers to an RLC channel. Also, when the ADAP layer entity identifies the bearers of the UEs, the ADAP layer entity may group data and map to one RLC channel on a UE basis or on a QoS basis, and process the grouped data. Overhead may be reduced by grouping data concatenated to one RLC channel using the data concatenation function. The data concatenation function may refer to a function of constructing one header or a small number of headers for a plurality of data, identifying data by indicating a header field indicating the concatenated data, and reducing overhead by not constructing a header for each data unnecessarily.

According to some embodiments, in the protocol layer architecture such as 1g-01 of FIG. 1G, a radio node 3 1g-10 may operate the same first RLC layer entities as the first RLC layer entities corresponding to the data bearers of the UE so as to process data received from the UE. Also, the radio node 3 1g-10 may process data received from a plurality of RLC layer entities in the ADAP layer entity and may map the processed data to a new RLC channel and second RLC layer entities corresponding thereto. The ADAP layer entity of the radio node 3 1g-10 may identify a plurality of bearers of a plurality of UEs and map the bearers to an RLC channel. Also, when the ADAP layer entity of the radio node 3 1g-10 identifies the bearers of the UEs, the ADAP layer entity may group data and map to one RLC channel on a UE basis or on a QoS basis, and process the grouped data in the second RLC layers. The RLC channel may be defined as a channel that groups data from the UEs based on QoS information and transmits the grouped data according to QoS, and the RLC channel may be defined as a channel that groups data for each UE and transmits the grouped data. The radio node 3 1g-10 may perform a procedure of allocating UL transmission resources received from the parent radio node according to QoS information of the RLC channel (or the second RLC layer entity), priority, the amount of data that may be transmitted (e.g., the amount of data allowed in the UL transmission resources, token), or the amount of data stored in the buffer for the RLC channel (or the second RLC layer entity). Also, the radio node 3 1g-10 may transmit data of each RLC channel to the parent radio node using the segmentation function or the concatenation function according to the allocated transmission resources.

The first RLC layer entity may refer to an RLC layer entity that processes data corresponding to the bearer in the same manner as the RLC layer entity corresponding to each bearer of the UE, and the second RLC layer entity may refer to an RLC layer entity that processes data mapped by the ADAP layer entity based on mapping information configured by the UE, QoS, or the parent radio node.

According to some embodiments, in the protocol layer architecture such as 1g-01 of FIG. 1G, a radio node 2 1g-10 may operate the second RLC layer entities corresponding to the second RLC layer entities of the child radio node (Node 3 1g-10) and process data according to the RLC channel.

According to some embodiments, in the protocol layer architecture such as 1g-01 of FIG. 1G, a highest radio node 1 1g-20 may operate the second RLC layer entities corresponding to the second RLC layer entities of the child radio node (Node 2 1g-15) and process data according to the RLC channel. The ADAP layer entity of the radio node 1 1g-20 may map data processed corresponding to the RLC channel to the PDCP layer entities suitable for each bearer of each UE. Also, the PDCP layer entity of the highest radio node corresponding to each bearer of each UE may process the received data, transmit the data to the SOAP layer entity, process the data in the SOAP layer entity, and transmit the data to the CN.

According to some embodiments, in the protocol layer architecture such as 1g-02 of FIG. 1G, a radio node 3 1g-30 may operate the same first RLC layer entities as the first RLC layer entities corresponding to the data bearers of the UE so as to process data received from the UE. Also, data received from a plurality of RLC layer entities of the radio node 3 1g-30 may be processed by driving the first RLC layer entities, and an ADAP layer entity of the radio node 3 1g-30 may process data processed by the first RLC layer entities and map the processed data to new RLC channels. The ADAP layer entity of the radio node 3 1g-30 may identify a plurality of bearers of a plurality of UEs and map the bearers to an RLC channel. Also, when the ADAP layer entity of the radio node 3 1g-30 identifies the bearers of the UEs, the ADAP layer entity may group data and map to one RLC channel on a UE basis or on a QoS basis, and process the grouped data. The RLC channel may be defined as a channel that groups data from the UEs based on QoS information and transmits the grouped data according to QoS, and the RLC channel may be defined as a channel that groups data for each UE and transmits the grouped data. The radio node 3 1g-30 may perform a procedure of allocating UL transmission resources received from the parent radio node according to QoS information of the RLC channel, priority, the amount of data that may be transmitted (e.g., the amount of data allowed in the UL transmission resources, token), or the amount of data stored in the buffer for the RLC channel. Also, the radio node 3 1g-30 may transmit data of each RLC channel to the parent radio node using the segmentation function or the concatenation function according to the allocated transmission resources.

According to some embodiments, in the protocol layer architecture such as 1g-02 of FIG. 1G, a radio node 2 1g-35 may process the received data corresponding to the RLC channel of the child radio node (Node 3) 1g-30 according to the RLC channel. Also, the ADAP layer entity of the radio node 2 1g-35 may map data received corresponding to the RLC channel to the first RLC layer entities suitable for each bearer of each UE. Also, the first RLC layer entity corresponding to each bearer of each UE of the radio node may process the received data, transmit the data again to the transmission first RLC layer entity, process the data, and transmit the data to the ADAP layer entity. Also, the ADAP layer entity may map data received from a plurality of RLC layer entities again to RLC channels, and perform data transmission so as to transmit data to a next parent radio node according to the allocation of UL transmission resources.

According to some embodiments, in the protocol layer architecture such as 1g-02 of FIG. 1G, a highest radio node 1 1g-40 may process data received corresponding to the RLC channel of the child radio node 2 (Node 2) 1g-35 according to the RLC channel. The ADAP layer entity of the highest radio node 1 1g-40 may map data received corresponding to the RLC channel to the first RLC layer entities corresponding to each bearer of each UE. Also, the highest radio node 1 1g-40 may operate the first RLC layer entities corresponding to each bearer of each UE, process the received data, and transmit data to the PDCP layer entities suitable for each bearer of each UE, and the PDCP layer entity of the highest radio node corresponding to each bearer of each UE may process the received data, transmit the data to the SOAP layer entities, process the data, and transmit the data to the CN.

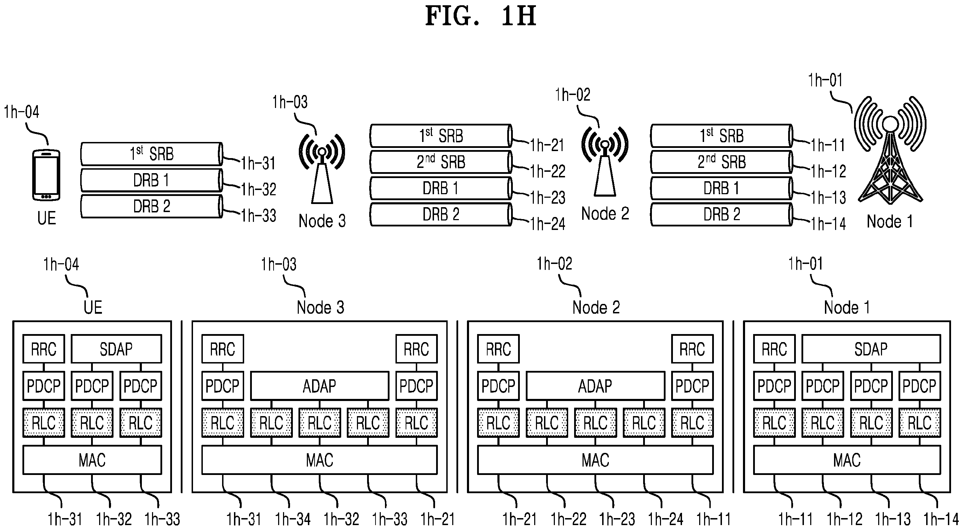

FIG. 1H illustrates a method of managing bearers of radio nodes in the wireless communication system supporting wireless backhaul, according to some embodiments of the present disclosure.

As illustrated in FIG. 1H, a radio node (e.g., UE) 1h-04 may transmit and receive data to and from a highest level radio node (e.g., IAB donor) 1h-01 connected to a CN through a radio node 3 (e.g., intermediate radio node or IAB node) 1h-03 and a radio node 2 (e.g., radio node or IAB node) 1h-02.

In a wireless backhaul network, first SRBs 1h-31, 1h-21, and 1h-11 or first RLC channels allowing each radio node to establish an RRC connection with a parent radio node may be configured. The first SRBs may be connected to a PHY layer entity, a MAC layer entity, and an RLC layer entity in the intermediate radio node, or may be directly connected to a PDCP layer entity without being connected to an ADAP layer entity. The first SRB or the first RLC channel may be used to exchange RRC messages between two radio nodes connected to one radio link, and the connected PDCP layer entity may perform separate ciphering and deciphering, or integrity protection, and integrity verification procedures.

Also, in the wireless backhaul network, second SRBs or second RLC channels 1h-34, 1h-22, and 1h-11 for transmitting and receiving a NAS message through a highest radio node (e.g., radio node 1) 1h-01 may be configured so that a radio node 3 accessed by the UE is connected (e.g., UE accessed IAB node or radio node 3) 1h-03 performs network configuration for the UE. The radio node 3 1h-03 accessed by the UE may confirm RRC messages received through the first SRBs or the first RLC channels, and may transmit data to be transmitted to the CN as the NAS message to the radio node 2 1h-02 through the second SRBs or the second RLC channels. The radio node 2 1h-02 may transmit the received data to the highest radio node 1 1h-01 again through the second SRBs or the second RLC channels. The highest radio node 1 1h-01 having received the data may transmit the data to the CN. When the highest radio node 1 1h-01 receives response data from the CN, the highest radio node 1 1h-01 may transmit the response data to the radio node 3 1h-03 through the second SRBs or the second RLC channels. The radio node 3 1h-03 may transmit the received response data to the UE through the first SRBs or the first RLC channels. The second SRBs or the second RLC channels may be connected to the PHY layer entity, the MAC layer entity, the RLC layer entity, and the ADAP layer entity in the intermediate ratio nodes (e.g., the radio node 2 1h-02) or the radio node 3 1h-03. Unlike the first SRBs or the first RLC channels, the second SRBs or the second RLC channels may be mapped to a new RLC layer entity through the ADAP layer entity and transmitted to the next radio node.

Also, in the wireless backhaul network, the radio node 3 accessed by the UE (e.g., UE accessed IAB node or radio node 3) 1h-03 may generate and manage the DRBs or the third RLC channels corresponding thereto so as to process data received from the UE. The DRBs 1h-32, 1h-33, 1h-23, 1h-24, 1h-13, and 1h-14 or the third RLC channels may be connected to the PHY layer entity, the MAC layer entity, the RLC layer entity, or the ADAP layer entity. The radio node 3 1h-03 accessed by the UE may map data corresponding to the DRBs or the third RLC channels to the new RLC layer entity through the ADAP layer entity and transmit the data to the next radio node. In order to process data received from the child radio node 3 1h-03 through the RLC channel, the intermediate radio node 2 1h-02 may connect to the PHY layer entity, the MAC layer entity, the RLC layer entity, or the ADAP layer entity and transmit and receive the data.

Also, in the method of managing and processing the bearers of the radio nodes, which is proposed in the present disclosure, each radio node may not perform the data concatenation function because the ADAP layer entity performs the data concatenation function for data corresponding to the DRBs of the UE and the ADAP layer entity is not connected to the first SRBs or the first RLC channels.

Also, in the method of managing and processing the bearers of the radio nodes, a security key used when ciphering and integrity protection procedures are performed on data for the first SRBs or the first RLC channels may be determined by the parent radio node of each radio link. The SRBs 1h-31, 1h-21, and 1h-11 may all share and use the same security key. However, in order to enhance security, each of the parent radio nodes may individually configure a security key (for example, the security key for the first SRB 1h-31 is determined by the radio node 3 1h-03, and the security key for the first SRB 1h-21 is determined by the radio node 2 1h-02) Also, for the second SRBs or the second RLC channels, each of the intermediate radio node 1h-02 and 1h-03 may not perform separate ciphering and integrity protection, except for the ciphering and integrity protection applied to the NAS message. Also, although each of the intermediate radio nodes 1h-02 and 1h-03 performs ciphering and integrity protection for the first SRBs or the first RLC channels, each of the intermediate radio nodes 1h-02 and 1h-03 may not perform separate ciphering and integrity protection for the third RLC channels, the second RLC channels, or DRBs except for the first SRBs and the first RLC channels.

Also, in the method of managing and processing the bearers of the radio nodes, the third SRBs or the fourth RLC channels may be defined and used. The third SRBs may be used as control bearers for transmitting and receiving control messages between each radio node and the highest radio node. A bearer for transmitting and receiving a message (e.g., an RRC message or an interface message of an upper layer entity) for allowing the highest radio node to directly control each radio node may be defined and used. For example, the third SRB or the fourth RLC channel may be established between the highest radio node 1 1h-01 and the radio node 2 1h-02 and control messages may be exchanged therebetween. The third SRB or the fourth RLC channel may be established between the highest radio node 1 1h-01 and the radio node 3 and control messages may be exchanged therebetween. The radio node 2 1h-02 may transmit data corresponding to the third SRB or the fourth RLC channel between the highest radio node 1 and the radio node 3.

The radio node (IAB node) may use the first SRB or the first RLC channel (the RLC bearer connected to the SRB) for RRC connection with the parent radio node (parent IAB node). The first SRB, the first RLC channel, or the first RLC bearer may be used only for the radio node (IAB node specific) purposes. Also, the radio node (IAB node) may use the parent radio node (parent IAB node) and the DRB or the third RLC channel (RLC bearer connected to the DRB). The DRB, the third RLC channel, or the third RLC bearer may be used to multiplex, and transmit and receive traffics of a plurality of data streams (or IP flows).

The RLC bearer may refer to a PHY layer entity, a MAC layer entity, or an RLC layer entity, which processes data corresponding to the SRB or the DRB in the radio node. Alternatively, the RLC bearer may refer to the connection of the PHY layer entity, the MAC layer entity, or the RLC layer entity.

The radio node may establish the connection with another radio node (IAB node) through the first RLC bearer and the third RLC bearer, and may transmit and receive data (e.g., RLC SDUs) through the first RLC bearer and the third RLC bearer. The data (e.g., RLC SDU) transmitted and received through the first RLC bearer may include one piece of data (e.g., PDCP PDU), and the data (e.g., RLC SDU) transmitted and received through the third RLC bearer may include or concatenate a plurality of pieces of data (e.g., PDCP PDUs). The first RLC bearer may be connected to the PDCP layer entity, and the third RLC bearer may be connected to the ADAP layer entity. Also, the data (e.g., RLC SDU) transmitted and received through the third RLC bearer (or DRB) may include a plurality of second headers (dedicated headers) added for each data (e.g., PDCP PDU) concatenated to one first header (common header).

Also, the first SRB, the first RLC channel, the first RLC bearer, the DRB, the third RLC channel, or the third RLC bearer may have a different ciphering portion. The radio node (IAB node) may establish a connection with another radio node through the first SRB (or the first RLC channel or the first RLC bearer) and the DRB (or the third RLC channel or the third RLC bearer). The data (e.g., RLC SDUs) may be transmitted and received through the first SRB (or the first RLC channel or the first RLC bearer) and the DRB (or the third RLC channel or the third RLC bearer). The data (e.g., RLC SDU) transmitted and received through the DRB (or the third RLC channel or the third RLC bearer) may be a plain text that is not ciphered from the first byte to the $n^{th}$ byte, and the remaining portions may be a ciphered text. Also, the data (e.g., RLC SDU) transmitted and received through the DRB (or the third RLC channel or the third RLC bearer) may be a plain text that is not ciphered from the first byte to the $(n+m)^{th}$ byte, and the remaining portions may be a ciphered text. Also, when the data (e.g., RLC SDU) transmitted and received through the DRB (or the third RLC channel or the third RLC bearer) is concatenated by the concatenation function, the plain text and the encrypted text may be repeatedly concatenated. In the radio node, the first SRB (or the first RLC channel or the first RLC bearer) may be connected to the PDCP entity, and the DRB (or the third RLC channel or the third RLC bearer) may be connected to the ADAP layer entity. n and m may be 0 or a positive integer, the magnitude of n may represent the PDCP header, and the magnitude of n+m may represent the ADAP header.

According to some embodiments, the radio nodes (e.g., IAB nodes) may reduce header overhead through the data concatenation function and efficiently utilize transmission resources.

Specifically, data may be concatenated in the ADAP layer entities of the radio nodes. In order to concatenate data when the header is configured in the ADAP layer entity, the header may be classified into a common header and a dedicated header. Also, a common header field for data concatenated in the ADAP layer entity is included in the common header, and different fields are included in the dedicated header for each header. Data may be concatenated through the common header and the dedicated header.

The header of the ADAP layer entity may include a common header or a dedicated header, and may include some of the following fields.

1. UE-specific ID for identifying UE
2. UE-bearer-specific ID for identifying bearer of certain UE
3. Route ID for routing
4. Radio node ID (IAB node ID or IAB donor ID)
5. Radio node address (IAB node address or IAB donor address)
6. QoS information (e.g., QoS ID)
7. Field (e.g., L field) indicating the length of concatenated data
8. Field (e.g., E field) indicating whether there is data or header concatenated behind
9. Other fields

In the invention, the header of the ADAP layer includes the field for the Route ID and the field for the radio node ID of the IAB donor.

Some fields may be included in the common header of the ADAP layer entity, and some fields may be included in the dedicated header of the ADAP layer entity. For example, the ADAP layer entity may concatenate data by including the QoS information in the common header and including the UE-specific ID or the UE-bearer-specific ID in the dedicated header. Also, the ADAP layer entity may concatenate data by including the QoS information and the radio node address or the route ID in the common header and including the UE-specific ID or the UE-bearer-specific ID in the dedicated header. Also, the ADAP layer entity may concatenate data by including the UE-specific ID in the common header and including the UE-bearer-specific ID or the QoS information in the dedicated header. Also, the ADAP layer entity may concatenate data by including the UE-specific ID, the radio node address, or the route ID in the common header and including the UE-bearer-specific ID or the QoS information in the dedicated header. By including the common portion of the header fields, which are included in the header of each data to be concatenated, in the common header and including the dedicated portion, which is not common, in the dedicated header, the ADAP layer entity may concatenate data to configure the header and the data.

The field (e.g., L field) indicating the length of the concatenated data, data concatenated behind, or the field (e.g., E field) indicating whether there is the header may be included in the common header or the dedicated header.

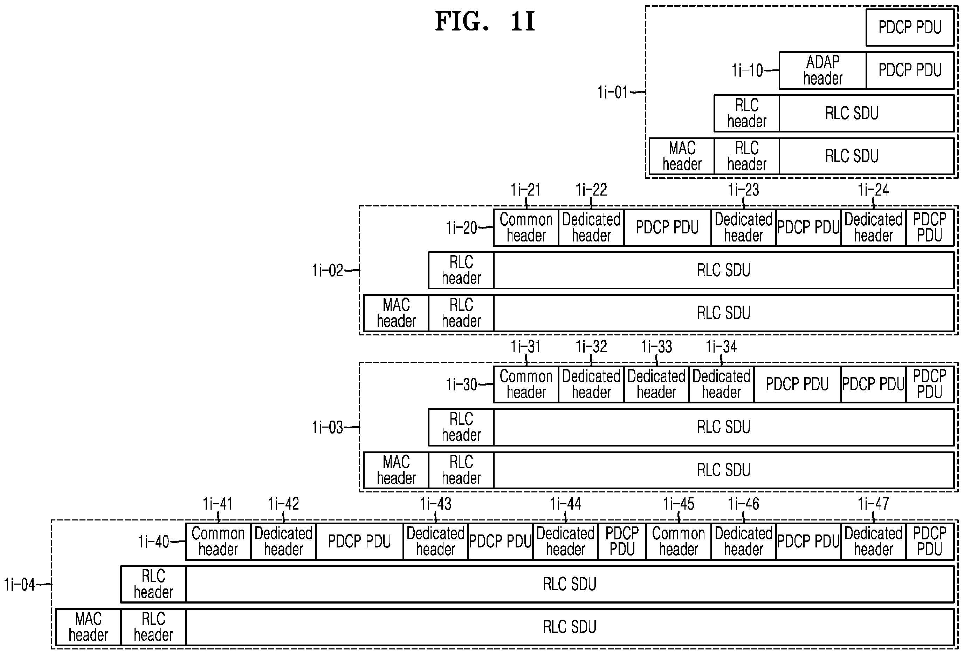

FIG. 1I is a diagram illustrating a header and data structure that an ADAP layer entity may have by performing a data concatenation function when a radio node has a protocol architecture such as 1g-01, in the wireless communication system supporting wireless backhaul, according to some embodiments of the present disclosure.

1i-01 of FIG. 1I indicates a first header and data structure that the ADAP layer entity may have by configuring a header and processing data when the ADAP layer entity does not perform a data concatenation function. In the protocol architecture 1i-10, an ADAP layer entity header may be configured for each data (e.g., PDCP PDU). The ADAP layer entity header may include some of the header fields described in the present disclosure.

1i-02 of FIG. 1I indicates a second header and data structure that the ADAP layer entity may have by configuring a header and concatenating and processing data when the ADAP layer performs a data concatenation function. The header and data structure may have one common header 1i-21 and dedicated headers 1i-22, 1i-23, and 1i-24 for each data when a plurality of pieces of data (e.g., PDCP PDUs) are concatenated. The common header or the dedicated header of the ADAP layer entity may include some of the header fields described in the present disclosure.

In the second header and data structure 1i-20 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as the number of concatenated data. For example, when three pieces of data are concatenated, the common header may include an E field, an L field, an E field, an L field, an E field, and an L field. Each of the E fields may indicate whether there is the L field behind, and each of the L fields may indicate the length of data concatenated behind or the length including the data and the header. A receiving end may separate concatenated data by analyzing the E field and the L field of the common header.

In the second header and data structure 1i-20 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, the common header may include an E field, an L field, an E field, and an L field. Each of the E fields may indicate whether there is the L field behind, and each of the L fields may indicate the length of data concatenated behind or the length including the data and the header. The receiving end may know the total data size through the second header and data structure 1i-20, and the length of the last concatenated data may be known by separating the previous data. Therefore, the overhead for the last E field and L field in the header and data structure may be reduced. The receiving end may separate concatenated data by analyzing the E field and the L field of the common header.

In the second header and data structure 1i-20 according to some embodiments, the dedicated header may include a field (e.g., L field) indicating the length of concatenated data and an E field indicating whether there is the data or the dedicated header concatenated behind. The field (e.g., L field) indicating the length of concatenated data may indicate the length of each concatenated data or the length including the header and the data, and the E field and the L field may be present as many as the number of concatenated data. For example, when three pieces of data are concatenated, each dedicated header may include an E field and an L field. The E field may indicate whether there is another dedicated header or data concatenated behind, and the L field may indicate the length of data concatenated behind or the length including the data and the header. A receiving end may separate concatenated data by analyzing the E field and the L field of the dedicated header.

In the second header and data structure 1i-20 according to some embodiments, the dedicated header may include a field (e.g., L field) indicating the length of concatenated data and an E field indicating whether there is the data or the dedicated header concatenated behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, each of dedicated header may include an E field and an L field. The E field may indicate whether there is another dedicated header or data concatenated behind, and the L field may indicate the length of data concatenated behind or the length including the data and the header. The receiving end may know the total data size through the second header and data structure 1i-20, and the length of the last concatenated data may be known by separating the previous data. Therefore, the overhead for the last E field and L field in the header and data structure may be reduced. The receiving end may separate concatenated data by analyzing the E field and the L field of the dedicated header.

In the second header and data structure 1i-20 according to some embodiments, the dedicated header may include a field (e.g., L field) indicating the length of concatenated data. The field (e.g., L field) indicating the length of concatenated data may indicate the length of each concatenated data or the length including the header and the data, and the E field and the L field may be present as many as the number of concatenated data. For example, when three pieces of data are concatenated, each dedicated header may include an L field. The L field may indicate the length of data concatenated behind or the length including the data and the header. Because the receiving end may know the total data size through the second header and data structure 1i-20 without the E field, the receiving end may also know that there is another dedicated header for the size remaining after the length indicated by the L field. The receiving end may separate concatenated data by analyzing the L field of the dedicated header.

In the second header and data structure 1i-20 according to some embodiments, the dedicated header may include a field (e.g., L field) indicating the length of concatenated data. The field (e.g., L field) indicating the length of concatenated data may indicate the length of each concatenated data or the length including the header and the data, and the L field may be present as many as one less than the total number of concatenated data. For example, when three pieces of data are concatenated, each dedicated header may include an L field. The L field may indicate the length of data concatenated behind or the length including the data and the header. Because the receiving end may know the total data size through the second header and data structure 1i-20 without the E field, the receiving end may also know that there is another dedicated header for the size remaining after the length indicated by the L field. Because the receiving end may know the total data size through the second header and data structure 1i-20, the length of the last concatenated data may be known by separating the previous data. Therefore, the overhead for the last L field may be reduced. The receiving end may separate concatenated data by analyzing the L field of the dedicated header.

1i-03 of FIG. 1I indicates a third header and data structure that the ADAP layer entity may have by configuring a header and concatenating and processing data when the ADAP layer performs a data concatenation function. The ADAP layer entity may have one common header 1i-31 and dedicated headers 1i-32, 1i-33, and 1i-34 for each data when a plurality of pieces of data (e.g., PDCP PDUs) are concatenated. The common header or the dedicated header of the ADAP layer entity may include some of the header fields described in the present disclosure.

In the third header and data structure 1i-30 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as the number of concatenated data. For example, when three pieces of data are concatenated, the common header may include an E field, an L field, an E field, an L field, an E field, and an L field. Each of the E fields may indicate whether there is the L field behind, and each of the L fields may indicate the length of data concatenated behind or the length including the data and the header. A receiving end may separate concatenated data by analyzing the E field and the L field of the common header.

In the third header and data structure 1i-30 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, the common header may include an E field, an L field, an E field, and an L field. Each of the E fields may indicate whether there is the L field behind, and each of the L fields may indicate the length of data concatenated behind or the length including the data and the header. The receiving end may know the total data size through the third header and data structure 1i-30, and the length of the last concatenated data may be known by separating the previous data. Therefore, the overhead for the last E field and L field may be reduced. The receiving end may separate concatenated data by analyzing the E field and the L field of the common header.

In the third header and data structure 1i-30 according to some embodiments, the dedicated header may include a field (e.g., L field) indicating the length of concatenated data and an E field indicating whether there is the data or the dedicated header concatenated behind. The field (e.g., L field) indicating the length of concatenated data may indicate the length of each concatenated data or the length including the header and the data, and the E field and the L field may be present as many as the number of concatenated data. For example, when three pieces of data are concatenated, each dedicated header may include an E field and an L field. The E field may indicate whether there is another dedicated header or data concatenated behind, and the L field may indicate the length of data concatenated behind or the length including the data and the header. The receiving end may separate concatenated data by analyzing the E field and the L field of the dedicated header.

In the third header and data structure 1i-30 according to some embodiments, the dedicated header may include a field (e.g., L field) indicating the length of concatenated data and an E field indicating whether there is the data or the dedicated header concatenated behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, each dedicated header may include an E field and an L field. The E field may indicate whether there is another dedicated header or data concatenated behind, and the L field may indicate the length of data concatenated behind or the length including the data and the header. The receiving end may know the total data size through the third header and data structure 1i-30, and the length of the last concatenated data may be known by separating the previous data. Therefore, the overhead for the last E field and L field may be reduced. The receiving end may separate concatenated data by analyzing the E field and the L field of the dedicated header.

In the third header and data structure 1i-30 according to some embodiments, the dedicated header may include a field (e.g., L field) indicating the length of concatenated data. The field (e.g., L field) indicating the length of concatenated data may indicate the length of each concatenated data or the length including the header and the data, and the E field and the L field may be present as many as the number of concatenated data. For example, when three pieces of data are concatenated, each dedicated header may include an L field. The L field may indicate the length of data concatenated behind or the length including the data and the header. Because the receiving end may know the total data size through the third header and data structure 1i-30 without the E field, the receiving end may also know that there is another dedicated header for the size remaining after the length indicated by the L field. The receiving end may separate concatenated data by analyzing the L field of the dedicated header.

In the third header and data structure 1i-30 according to some embodiments, the dedicated header may include a field (e.g., L field) indicating the length of concatenated data. The field (e.g., L field) indicating the length of concatenated data may indicate the length of each concatenated data or the length including the header and the data, and the L field may be present as many as one less than the total number of concatenated data. For example, when three pieces of data are concatenated, each dedicated header may include an L field. The L field may indicate the length of data concatenated behind or the length including the data and the header. Because the receiving end may know the total data size through the third header and data structure 1i-30 without the E field, the receiving end may also know that there is another dedicated header for the size remaining after the length indicated by the L field. The receiving end may know the total data size through the third header and data structure 1i-30, and the length of the last concatenated data may be known by separating the previous data. Therefore, the overhead for the last L field may be reduced. The receiving end may separate concatenated data by analyzing the L field of the dedicated header.

1i-04 of FIG. 1I indicates a fourth header and data structure that the ADAP layer entity may have by configuring a header and concatenating and processing data when the ADAP layer entity performs a data concatenation function. The ADAP layer entity may have one common header 1i-41 and 1i-45 and dedicated headers 1i-42, 1i-43, 1i-44, 1i-46, and 1i-47 for each data when a plurality of pieces of data (e.g., PDCP PDUs) are concatenated. The common header or the dedicated header of the ADAP layer entity may include some of the header fields described in the present disclosure.

In the fourth header and data structure 1i-40 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as the number of concatenated data. For example, when three pieces of data are concatenated, the common header may include an E field, an L field, an E field, an L field, an E field, and an L field. Each of the E fields may indicate whether there is the L field behind, or may indicate whether there is a new common header, and each of the L fields may indicate the length of data concatenated behind or the length including the data and the header. A receiving end may separate concatenated data by analyzing the E field and the L field of the common header.

In the fourth header and data structure 1i-40 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, the common header may include an E field, an L field, an E field, and an L field. Each of the E fields may indicate whether there is the L field behind, or may indicate whether there is a new common header (for example, the E field may indicate that there is a new common header when the E field indicates that there is no dedicated header but the total data size remains), and each of the L fields may indicate the length of data concatenated behind or the length including the data and the header. The receiving end may know the total data size through the fourth header and data structure 1i-40, and the length of the last concatenated data may be known by separating the previous data. Therefore, the overhead for the last E field and L field may be reduced. Therefore, the receiving end may separate concatenated data by analyzing the E field and the L field of the common header.

In the fourth header and data structure 1i-40 according to some embodiments, the dedicated header may include a field (e.g., L field) indicating the length of concatenated data and an E field indicating whether there is the data or the dedicated header concatenated behind. The field (e.g., L field) indicating the length of concatenated data may indicate the length of each concatenated data or the length including the header and the data, and the E field and the L field may be present as many as the number of concatenated data. For example, when three pieces of data are concatenated, each dedicated header may include an E field and an L field. The E field may indicate whether there is another dedicated header or data concatenated behind, and may indicate whether there is a new common header (for example, the E field may indicate that there is a new common header when the E field indicates that there is no dedicated header but the total data size remains), and the L field may indicate the length of data concatenated behind or the length including the data and the header. The receiving end may separate concatenated data by analyzing the E field and the L field of the dedicated header.

In the fourth header and data structure 1i-40 according to some embodiments, the dedicated header may include a field (e.g., L field) indicating the length of concatenated data and an E field indicating whether there is the data or the dedicated header concatenated behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, each dedicated header may include an E field and an L field. The E field may indicate whether there is another dedicated header or data concatenated behind, and may indicate whether there is a new common header (for example, the E field may indicate that there is a new common header when the E field indicates that there is no dedicated header but the total data size remains), and the L field may indicate the length of data concatenated behind or the length including the data and the header. The receiving end may know the total data size through the fourth header and data structure 1i-40, and the length of the last concatenated data may be known by separating the previous data. Therefore, the overhead for the last E field and L field may be reduced. The receiving end may separate concatenated data by analyzing the E field and the L field of the dedicated header.

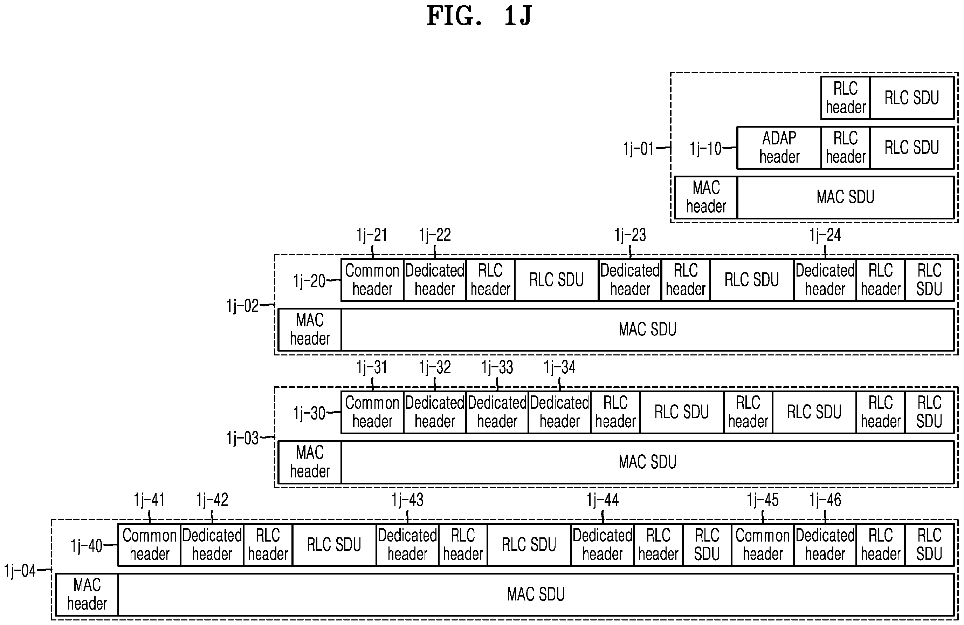

FIG. 1J is a diagram illustrating a header and data structure that an ADAP layer entity may have by performing a data concatenation function when a radio node has a protocol architecture such as 1g-02, in the wireless communication system supporting wireless backhaul, according to some embodiments of the present disclosure.

1j-01 of FIG. 1J indicates a first header and data structure that the ADAP layer entity may have by configuring a header and processing data when the ADAP layer does not perform a data connection function. In the ADAP layer entity, an ADAP layer entity header may be configured for each data (e.g., RLC PDU or PDCP PDU) as in 1j-10. The ADAP layer entity header may include some of the header fields described in the present disclosure.

1j-02 of FIG. 1J indicates a second header and data structure that the ADAP layer entity may have by configuring a header and concatenating and processing data when the ADAP layer entity performs a data concatenation function. The ADAP layer entity may have one common header 1j-21 and dedicated headers 1j-22, 1j-23, and 1j-24 for each data when a plurality of pieces of data (e.g., PDCP PDUs) are concatenated. The common header or the dedicated header of the ADAP layer entity may include some of the header fields described in the present disclosure.

In the second header and data structure 1j-20 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as the number of concatenated data. For example, when three pieces of data are concatenated, the common header may include an E field, an L field, an E field, an L field, an E field, and an L field. Each of the E fields may indicate whether there is the L field behind, and each of the L fields may indicate the length of data concatenated behind or the length including the data and the header. A receiving end may separate concatenated data by analyzing the E field and the L field of the common header.

In the second header and data structure 1j-20 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, the common header may include an E field, an L field, an E field, and an L field. Each of the E fields may indicate whether there is the L field behind, and each of the L fields may indicate the length of data concatenated behind or the length including the data and the header. The receiving end may know the total data size through the second header and data structure 1j-20, and the length of the last concatenated data may be known by separating the previous data. Therefore, the overhead for the last E field and L field may be reduced. The receiving end may separate concatenated data by analyzing the E field and the L field of the common header.

In the second header and data structure 1j-20 according to some embodiments, the dedicated header may include a field (e.g., L field) indicating the length of concatenated data and an E field indicating whether there is a dedicated header or data concatenated behind. The field (e.g., L field) indicating the length of concatenated data may indicate the length of each concatenated data or the length including the header and the data, and the E field and the L field may be present as many as the number of concatenated data. For example, when three pieces of data are concatenated, each dedicated header may include an E field and an L field. The E field may indicate whether there is another dedicated header or data concatenated behind, and the L field may indicate the length of data concatenated behind or the length including the data and the header. The receiving end may separate concatenated data by analyzing the E field and the L field of the dedicated header.

In the second header and data structure 1j-20 according to some embodiments, the dedicated header may include a field (e.g., L field) indicating the length of concatenated data and an E field indicating whether there is a dedicated header or data concatenated behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, each dedicated header may include an E field and an L field. The E field may indicate whether there is another dedicated header or data concatenated behind, and the L field may indicate the length of data concatenated behind or the length including the data and the header. The receiving end may know the total data size through the second header and data structure 1j-20, and the length of the last concatenated data may be known by separating the previous data. Therefore, the overhead for the last E field and L field may be reduced. The receiving end may separate concatenated data by analyzing the E field and the L field of the dedicated header.

In the second header and data structure 1j-20 according to some embodiments, the dedicated header may include a field (e.g., L field) indicating the length of concatenated data. The field (e.g., L field) indicating the length of concatenated data may indicate the length of each concatenated data or the length including the header and the data, and the L field may be present as many as the number of concatenated data. For example, when three pieces of data are concatenated, each dedicated header may include an L field, and the L field may indicate the length of data concatenated behind or the length including the data and the header. The receiving end may know the total data size through the second header and data structure 1j-20 without the E field, and may also know that there is another dedicated header for the size remaining after the length indicated by the L field. The receiving end may separate concatenated data by analyzing the L field of the dedicated header.

In the second header and data structure 1j-20 according to some embodiments, the dedicated header may include a field (e.g., L field) indicating the length of concatenated data. The field (e.g., L field) indicating the length of concatenated data may indicate the length of each concatenated data or the length including the header and the data, and the L field may be present as many as one less than the total number of concatenated data. For example, when three pieces of data are concatenated, each dedicated header may include an L field, and the L field may indicate the length of data concatenated behind or the length including the data and the header. The receiving end may know the total data size through the second header and data structure 1j-20 without the E field, and may also know that there is another dedicated header for the size remaining after the length indicated by the L field. The receiving end may know the total data size through the second header and data structure 1j-20, and the length of the last concatenated data may be known by separating the previous data. Therefore, the overhead for the last L field may be reduced. The receiving end may separate concatenated data by analyzing the L field of the dedicated header.

1j-03 of FIG. 1J indicates a third header and data structure that the ADAP layer entity may have by configuring a header and concatenating and processing data when the ADAP layer entity performs a data concatenation function. The ADAP layer entity may have one common header 1j-31 and dedicated headers 1j-32, 1j-33, and 1j-34 for each data when a plurality of pieces of data (e.g., PDCP PDUs) are concatenated. The common header or the dedicated header of the ADAP layer entity may include some of the header fields described in the present disclosure.

In the third header and data structure 1j-30 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as the number of concatenated data. For example, when three pieces of data are concatenated, the common header may include an E field, an L field, an E field, an L field, an E field, and an L field. Each of the E fields may indicate whether there is the L field behind, and each of the L fields may indicate the length of data concatenated behind or the length including the data and the header. The receiving end may separate concatenated data by analyzing the E field and the L field of the common header.

In the third header and data structure 1j-30 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, the common header may include an E field, an L field, an E field, and an L field. Each of the E fields may indicate whether there is the L field behind, and each of the L fields may indicate the length of data concatenated behind or the length including the data and the header. The receiving end may know the total data size through the second header and data structure 1j-20, and the length of the last concatenated data may be known by separating the previous data. Therefore, the overhead for the last E field and L field may be reduced. The receiving end may separate concatenated data by analyzing the E field and the L field of the common header.

In the third header and data structure 1j-30 according to some embodiments, the dedicated header may include a field (e.g., L field) indicating the length of concatenated data and an E field indicating whether there is a dedicated header or data concatenated behind. The field (e.g., L field) indicating the length of concatenated data may indicate the length of each concatenated data or the length including the header and the data, and the E field and the L field may be present as many as the number of concatenated data. For example, when three pieces of data are concatenated, each dedicated header may include an E field and an L field. The E field may indicate whether there is another dedicated header or data concatenated behind, and the L field may indicate the length of data concatenated behind or the length including the data and the header. The receiving end may separate concatenated data by analyzing the E field and the L field of the dedicated header.

In the third header and data structure 1j-30 according to some embodiments, the dedicated header may include a field (e.g., L field) indicating the length of concatenated data and an E field indicating whether there is a dedicated header or data concatenated behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, each dedicated header may include an E field and an L field. The E field may indicate whether there is another dedicated header or data concatenated behind, and the L field may indicate the length of data concatenated behind or the length including the data and the header. The receiving end may know the total data size through the second header and data structure 1j-20, and the length of the last concatenated data may be known by separating the previous data. Therefore, the overhead for the last E field and L field may be reduced. The receiving end may separate concatenated data by analyzing the E field and the L field of the dedicated header.

In the third header and data structure 1j-30 according to some embodiments, the dedicated header may include a field (e.g., L field) indicating the length of concatenated data. The field (e.g., L field) indicating the length of concatenated data may indicate the length of each concatenated data or the length including the header and the data, and the L field may be present as many as the number of concatenated data. For example, when three pieces of data are concatenated, each dedicated header may include an L field, and the L field may indicate the length of data concatenated behind or the length including the data and the header. The receiving end may know the total data size through the second header and data structure 1j-20 without the E field, and may also know that there is another dedicated header for the size remaining after the length indicated by the L field. The receiving end may separate concatenated data by analyzing the L field of the dedicated header.

In the third header and data structure 1j-30 according to some embodiments, the dedicated header may include a field (e.g., L field) indicating the length of concatenated data. The field (e.g., L field) indicating the length of concatenated data may indicate the length of each concatenated data or the length including the header and the data, and the L field may be present as many as one less than the total number of concatenated data. For example, when three pieces of data are concatenated, each dedicated header may include an L field, and the L field may indicate the length of data concatenated behind or the length including the data and the header. The receiving end may know the total data size through the second header and data structure 1j-20 without the E field, and may also know that there is another dedicated header for the size remaining after the length indicated by the L field. The receiving end may know the total data size through the second header and data structure 1j-20, and the length of the last concatenated data may be known by separating the previous data. Therefore, the overhead for the last L field may be reduced. The receiving end may separate concatenated data by analyzing the L field of the dedicated header.

1j-04 of FIG. 1J indicates a fourth header and data structure that the ADAP layer entity may have by configuring a header and concatenating and processing data when the ADAP layer entity performs a data concatenation function. The ADAP layer entity may have one common header 1j-41 and 1j-45 and dedicated headers 1j-42, 1j-43, 1j-44, 1j-46, and 1j-47 for each data when a plurality of pieces of data (e.g., PDCP PDUs) are concatenated. The common header or the dedicated header of the ADAP layer entity may include some of the header fields described in the present disclosure.

In the fourth header and data structure 1j-40 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as the number of concatenated data. For example, when three pieces of data are concatenated, the common header may include an E field, an L field, an E field, an L field, an E field, and an L field. Each of the E fields may indicate whether there is the L field behind, or may indicate whether there is a new common header, and each of the L fields may indicate the length of data concatenated behind or the length including the data and the header. The receiving end may separate concatenated data by analyzing the E field and the L field of the common header.

In the fourth header and data structure 1j-40 according to some embodiments, the common header may include a field (e.g., L field) indicating the length of concatenated data and an E field indicating whether there is the L field behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, the common header may include an E field, an L field, an E field, and an L field. Each of the E fields may indicate whether there is the L field behind, or may indicate whether there is a new common header (for example, the E field may indicate that there is a new common header when the E field indicates that there is no dedicated header but the total data size remains), and each of the L fields may indicate the length of data concatenated behind or the length including the data and the header. The receiving end may know the total data size through the second header and data structure 1j-20, and the length of the last concatenated data may be known by separating the previous data. Therefore, the overhead for the last E field and L field may be reduced. The receiving end may separate concatenated data by analyzing the E field and the L field of the common header.

In the fourth header and data structure 1j-40 according to some embodiments, the dedicated header may include a field (e.g., L field) indicating the length of concatenated data and an E field indicating whether there is a dedicated header or data concatenated behind. The field (e.g., L field) indicating the length of concatenated data may indicate the length of each concatenated data or the length including the header and the data, and the E field and the L field may be present as many as the number of concatenated data. For example, when three pieces of data are concatenated, each dedicated header may include an E field and an L field. The E field may indicate whether there is another dedicated header or data concatenated behind, or may indicate whether there is a new common header (for example, the E field may indicate that there is a new common header when the E field indicates that there is no dedicated header but the total data size remains), and the L field may indicate the length of data concatenated behind or the length including the data and the header. The receiving end may separate concatenated data by analyzing the E field and the L field of the dedicated header.

In the fourth header and data structure 1j-40 according to some embodiments, the dedicated header may include a field (e.g., L field) indicating the length of concatenated data and an E field indicating whether there is a dedicated header or data concatenated behind. The field (e.g., L field) indicating the length of concatenated data may indicate the length of each concatenated data or the length including the header and the data, and the E field and the L field may be present as many as one less than the total number of concatenated data. For example, when three pieces of data are concatenated, each dedicated header may include an E field and an L field. The E field may indicate whether there is another dedicated header or data concatenated behind, or may indicate whether there is a new common header (for example, the E field may indicate that there is a new common header when the E field indicates that there is no dedicated header but the total data size remains), and the L field may indicate the length of data concatenated behind or the length including the data and the header. The receiving end may know the total data size through the second header and data structure 1j-20, and the length of the last concatenated data may be known by separating the previous data. Therefore, the overhead for the last E field and L field may be reduced. The receiving end may separate concatenated data by analyzing the E field and the L field of the dedicated header.

The data concatenation function of the ADAP layer entity according to some embodiments of the present disclosure may be performed by applying the same function to the RLC header in the RLC layer entity, without performing the same function in the ADAP layer entity. The data concatenation function is not limited to the ADAP layer entity, and the data concatenation function based on the data structure according to some embodiments of the present disclosure may be applied to other layers. Also, in the present disclosure, how much data the layer entity performing the data concatenation function concatenates may be determined according to one of the following conditions.

1. Data may be concatenated according to size of UL transmission resource given to RLC channel or logical channel.
2. Data may be connected by number of data configured by RRC.
3. Data may be concatenated so as not to have size greater than threshold configured by RRC.
4. Layer entity performing data concatenation function may concatenate data received for certain time. Data concatenation function may be performed on data received every certain time.
5. How much data is concatenated may depend on implementation of radio node.

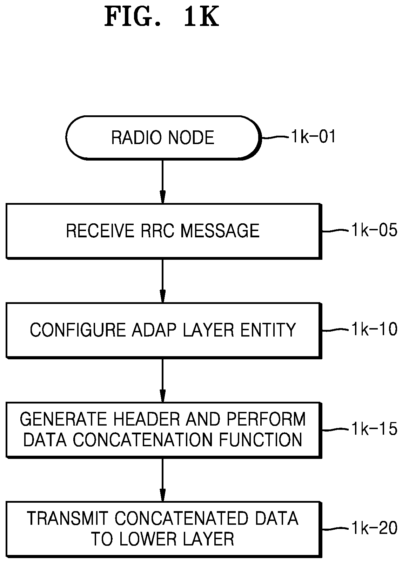

FIG. 1K is a diagram illustrating an operation of a radio node using a data concatenation function, according to some embodiments of the present disclosure.

According to some embodiments, a radio node 1k-01 may apply the configuration of each layer entity when the radio node 1k-01 receives an RRC message (1k-05), may perform a data concatenation function when the data concatenation function is configured for an ADAP layer entity, and may not perform the data concatenation function when the data concatenation function is not configured. The radio node 1k-01 may configure the use of the data concatenation function as a default function, and may also configure no use of the data concatenation function as a default function. Also, the radio node 1k-01 may be configured to always use the data concatenation function in the ADAP layer entity (1k-10). When the data concatenation function is applied to the ADAP layer entity, the radio node 1k-01 may generate a common header and dedicated headers based on the header and data structure according to some embodiments of the present disclosure and concatenate data (1k-15), and may transmit the concatenated data to lower layer entities (1k-20).

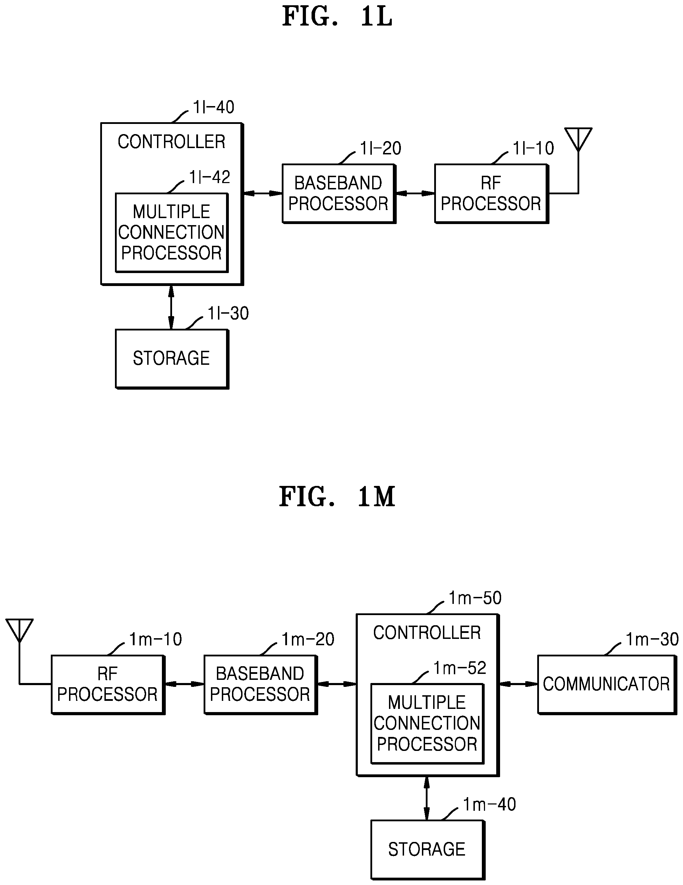

FIG. 1L illustrates an architecture of a UE or a radio node, according to some embodiments of the present disclosure.

According to some embodiments, a UE may include a radio frequency (RF) processor 1l-10, a baseband processor 1l-20, a storage 1l-30, and a controller 1l-40. Of course, the present disclosure is not limited to the above example, and the UE may include fewer elements or more elements than the elements illustrated in FIG. 1L.

The RF processor 1l-10 may perform functions for transmitting and receiving signals through a radio channel, such as signal band conversion, amplification, etc. That is, the RF processor 1l-10 may up-convert a baseband signal provided from the baseband processor 1l-20 into an RF band signal and transmit the RF band signal through an antenna, and may down-convert an RF band signal received through an antenna into a baseband signal. For example, the RF processor 1l-10 may include a transmission filter, a reception filter, an amplifier, a mixer, an oscillator, a digital-to-analog converter (DAC), an analog-to-digital converter (ADC), and the like.

Although only one antenna is illustrated in FIG. 1L, the UE may include a plurality of antennas. Also, the RF processor 1l-10 may include a plurality of RF chains. Furthermore, the RF processor 1l-10 may perform beamforming. For beamforming, the RF processor 1l-10 may adjust the phases and magnitudes of signals transmitted and received through a plurality of antennas or antenna elements. Also, the RF processor 1l-10 may perform MIMO and may receive a plurality of layers when performing the MIMO. The RF processor 1l-10 may perform Rx beam sweeping by appropriately setting a plurality of antennas or antenna elements under the control of the controller 1l-40, or may adjust the direction and beam width of the reception beam so that the reception beam is cooperated with transmission beam.

The baseband processor 1l-20 may perform a conversion function between a baseband signal and a bit string according to a physical layer standard of a system. For example, upon transmission of data, the baseband processor 1l-20 may encode and modulate a transmission bit string to generate complex symbols.

Also, upon reception of data, the baseband processor 1l-20 may reconstruct the reception bit string by demodulating and decoding the baseband signal provided from the RF processor 1l-10. For example, in the case of conforming to an OFDM scheme, upon transmission of data, the baseband processor 1l-20 may encode and modulate the transmission bit string to generate complex symbols, map the complex symbols to sub-carriers, and configure OFDM symbols through an inverse fast Fourier transform (IFFT) operation and cyclic prefix (CP) insertion. Also, upon reception of data, the baseband processor 1l-20 may segment the baseband signal provided from the RF processor 1l-10 in units of OFDM symbols, reconstruct signals mapped to sub-carriers through a fast Fourier transform (FFT) operation, and reconstruct a reception bit string through demodulation and decoding.

The baseband processor 1l-20 and the RF processor 1l-10 may transmit and receive signals as described above. Therefore, the baseband processor 1l-20 and the RF processor 1l-10 may be referred to as a transmitter, a receiver, a transceiver, or a communicator. Furthermore, at least one of the baseband processor 1l-20 and the RF processor 1l-10 may include a plurality of communication modules so as to support a plurality of different radio access technologies. Also, at least one of the baseband processor 1I-20 and the RF processor 1I-10 may include different communication modules so as to process signals of different frequency bands. For example, the different radio access technologies may include an LTE network, an NR network, and the like. Also, the different frequency bands may include a super high frequency (SHF) (e.g., 2.5 GHz or 2 GHz) band and a millimeter wave (e.g., 60 GHz) band.

The storage 1I-30 may store data such as basic programs, application programs, and configuration information for the operations of the UE. The storage 1I-30 may provide stored data according to the request of the controller 1I-40. The storage 1I-30 may include a storage medium such as read-only memory (ROM), random access memory (RAM), hard disk, compact disc read-only memory (CD-ROM), and digital versatile disc (DVD), or any combination thereof. Also, the storage 1I-30 may include a plurality of memories. According to some embodiments, the storage 1I-30 may store programs for performing the wireless communication method of reporting Scell RLF described above.

The controller 1I-40 may control overall operations of the UE. For example, the controller 11-40 may control the baseband processor 1I-20 and the RF processor 1I-10 to transmit and receive signals through the baseband processor 1I-20 and the RF processor 1I-10. Also, the controller 1I-40 may control the storage 1I-40 to record data in the storage 1I-40 and read data from the storage 1I-40. To this end, the controller 1I-40 may include at least one processor. For example, the controller 1I-40 may include a communication processor (CP) that performs control for communication, and an application processor (AP) that controls an upper layer, such as an application program. Also, at least one element in the UE may be implemented as one chip.

FIG. 1M is a block diagram of a Tx/Rx point (TRP) or a radio node in the wireless communication system, according to some embodiments of the present disclosure.

As illustrated in FIG. 1M, the base station may include an RF processor 1m-10, a baseband processor 1m-20, a backhaul communicator 1m-30, a storage 1m-40, and a controller 1m-50. Of course, the present disclosure is not limited to the above example, and the TRP may include fewer elements or more elements than the elements illustrated in FIG. 1M.

The RF processor 1m-10 may perform functions for transmitting and receiving signals through a radio channel, such as signal band conversion, amplification, etc. That is, the RF processor 1m-10 may up-convert a baseband signal provided from the baseband processor 1m-20 into an RF band signal and transmit the RF band signal through an antenna, and may down-convert an RF band signal received through an antenna into a baseband signal. For example, the RF processor 1m-10 may include a transmission filter, a reception filter, an amplifier, a mixer, an oscillator, a DAC, an ADC, and the like. Although only one antenna is illustrated in FIG. 1M, the first access node may include a plurality of antennas. Also, the RF processor 1m-10 may include a plurality of RF chains. Furthermore, the RF processor 1m-10 may perform beamforming. For beamforming, the RF processor 1m-10 may adjust the phases and magnitudes of signals transmitted and received through a plurality of antennas or antenna elements. The RF processor may perform a DL MIMO operation by transmitting one or more layers.

The baseband processor 1m-20 may perform a conversion function between a baseband signal and a bit string according to a physical layer standard of a first radio access technology. For example, upon transmission of data, the baseband processor 1m-20 may encode and modulate a transmission bit string to generate complex symbols. Also, upon reception of data, the baseband processor 1m-20 may reconstruct the reception bit string by demodulating and decoding the baseband signal provided from the RF processor 1m-10. For example, in the case of conforming to an OFDM scheme, upon transmission of data, the baseband processor 1m-20 may encode and modulate the transmission bit string to generate complex symbols, map the complex symbols to sub-carriers, and configure OFDM symbols through an IFFT operation and CP insertion. Also, upon reception of data, the baseband processor 1m-20 may segment the baseband signal provided from the RF processor 1m-10 in units of OFDM symbols, reconstruct signals mapped to sub-carriers through an FFT operation, and reconstruct a reception bit string through demodulation and decoding. The baseband processor 1m-20 and the RF processor 1m-10 may transmit and receive signals as described above. Therefore, the baseband processor 1m-20 and the RF processor 1m-10 may be referred to as a transmitter, a receiver, a transceiver, a communicator, or a wireless communicator.

The communicator 1m-30 may provide an interface for performing communication with other nodes in the network.

The storage 1m-40 may store data such as basic programs, application programs, and configuration information for the operations of the master base station. In particular, the storage 1m-40 may store information about bearers allocated to the connected UE, measurement results reported from the connected UE, etc. Also, the storage 1m-40 may store information that is the criterion for determining whether to provide multiple connections to the UE or to stop multiple connections. The storage 1m-40 may provide stored data in response to the request of the controller 1m-50. The storage 1m-40 may include a storage medium such as ROM, RAM, hard disk, CD-ROM, and DVD, or any combination thereof. Also, the storage 1m-40 may include a plurality of memories. According to some embodiments, the storage 1m-40 may store programs for performing the wireless communication method of reporting Scell RLF described above.

The controller 1m-50 may control overall operations of the master base station. For example, the controller 1m-50 may transmit and receive signals through the baseband processor 1m-20 and the RF processor 1m-10 or through the backhaul communicator 1m-30. Also, the controller 1m-50 may record data in the storage 1m-40 and read data from the storage 1m-40. To this end, the controller 1m-50 may include at least one processor. Also, at least one element in the TRP may be implemented as one chip.

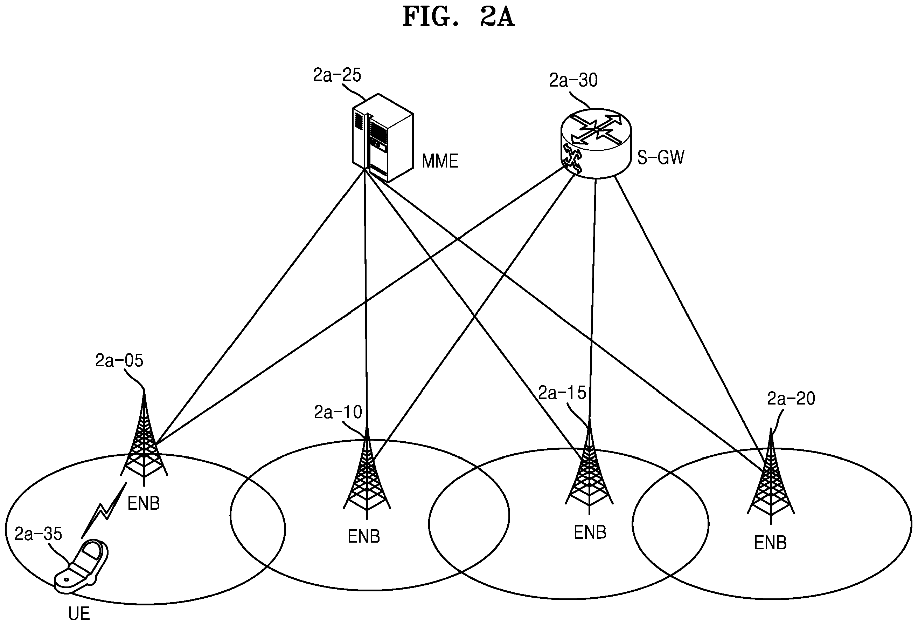

FIG. 2A is a diagram illustrating an architecture of an LTE system according to some embodiments of the present disclosure.

Referring to FIG. 2A, a wireless communication system includes a plurality of ENBs 2a-05, 2a-10, 2a-15, and 2a-20, an MME 2a-20, and an S-GW 2a-30. A UE 2a-35 accesses an external network through the ENBs 2a-05, 2a-10, 2a-15, and 2a-20 and the S-GW 2a-30.

The ENBs 2a-05, 2a-10, 2a-15, and 2a-20 are access nodes of a cellular network and provide radio access to UEs accessing the network. That is, the ENBs 2a-05, 2a-10, 2a-15, and 2a-20 collect status information such as buffer status, available transmission power status, and channel status of UEs, perform scheduling, and support connection between UEs and a CN. The MME 2a-25 may be a device that is responsible for various control functions as well as mobility management functions for the UE and may be connected to a plurality of ENBs, and the S-GW 2a-30 may be a device that provides a data bearer. Also, the MME 2a-25 and the S-GW 2a-30 may further perform authentication, bearer management, etc. for the UE accessing the network, and may process packets received from the ENBs 2a-05, 2a -10,2a-15, and 2a-20 or packets to be transmitted to ENBs 2a-05, 2a-10, 2a-15, and 2a-20.

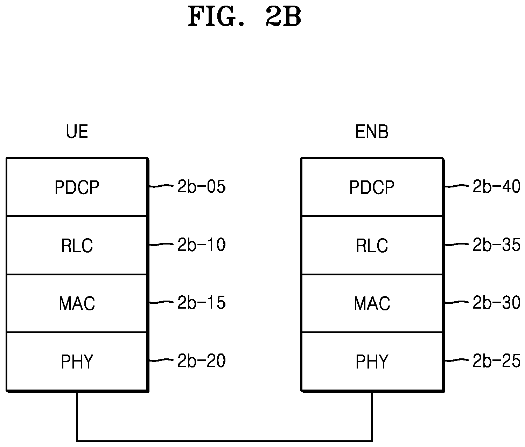

FIG. 2B is a diagram illustrating a radio protocol architecture of the LTE system, according to some embodiments of the present disclosure.

Referring to FIG. 2B, in the radio protocol of the LTE system, the UE and the ENB may respectively include PDCPs 2b-05 and 2b-40, RLCs 2b-10 and 2b-35, and MACs 2b-15 and 2b-30. Of course, the present disclosure is not limited to the above examples.

According to some embodiments, the PDCPs 2b-05 and 2b-40 may be responsible for operations such as IP header compression/reconstruction, and the RLCs 2b-10 and 2b-35 may reconfigure a PDCP PDU to an appropriate size. The MACs 2b-15 and 2b-30 may be connected to RLC layer entities configured in one UE, and perform an operation of multiplexing RLC PDUs to MAC PDUs and demultiplexing RLC PDUs from MAC PDUs.

PHY layers 2b-20 and 2b-25 may perform an operation of channel-coding and modulating upper layer data, making the channel-coded and modulated upper layer data into OFDM symbols, and transmitting the OFDM symbols over a radio channel, or demodulating OFDM symbols received through a radio channel, channel-decoding the demodulated OFDM symbols, and transmitting the decoded OFDM symbols to the upper layer. Also, HARQ may be used for additional error correction in the PHY layer, and the receiving end may transmit the reception or non-reception of the packet transmitted from the transmitting end in 1 bit. This is referred to as HARQ ACK/NACK. DL HARQ ACK/NACK information for UL transmission may be transmitted through a physical channel such as a physical hybrid-ARQ indicator channel (PHICH), and UL HARQ ACK/NACK information for DL transmission may be transmitted through a physical uplink control channel (PUCCH) or a physical uplink shared channel (PUSCH). The PUCCH is generally transmitted in an UL of a PCell to be described later. When the UE supports the PUCCH, the ENB may transmit the PUCCH to the corresponding UE in addition to the SCell to be described later. This is referred to as PUCCH SCell.

According to some embodiments, an HARQ transmission scheme includes asynchronous HARQ and synchronous HARQ. The asynchronous HARQ is a scheme in which the timing at which retransmission occurs when (re)transmission has failed is not fixed, and the synchronous HARQ is a scheme in which the timing at which retransmission occurs when (re)transmission has failed is fixed (e.g., 8 ms). Also, a plurality of transmission and reception may be simultaneously performed in parallel for DL and UL with respect to one UE, and each transmission may be identified by a HARQ process ID.

In the asynchronous HARQ, the retransmission timing is not fixed. Thus, for each retransmission, the base station may provide information about which HARQ process this transmission belongs to and information about whether this transmission is initial transmission or retransmission through the PDCCH. The ENB may transmit the information about which HARQ process this transmission belongs through an HARQ process ID field in the PDCCH. The ENB may transmit the information about whether this transmission is initial transmission or retransmission through a new data indicator (NDI) bit in the PDCCH. When the corresponding bit is not changed compared to an existing value, this means retransmission, and when the corresponding bit is changed to a different value, this means new transmission. Accordingly, the UE receives resource assignment information in the PDCCH transmitted by the ENB and identifies details of the transmission. In the case of the DL, actual data may be received through a physical downlink shared channel (PDSCH), and in the case of the UL, actual data may be transmitted through a PUSCH.

Although not illustrated, RRC layers exist above the PDCP layers of the UE and the ENB, respectively, and the RRC layer may exchange access and measurement-related configuration control messages for radio resource control.

The PHY layer may include one or more frequencies/carriers. A technology for simultaneously configuring and using a plurality of frequencies in one ENB is referred to as carrier aggregation (CA). The CA refers to the additional use of a primary carrier and one or more subcarriers, instead of using only one carrier for communication between the UE and the base station (E-UTRAN NodeB, eNB, etc.), such that the amount of transmission dramatically increases by the number of subcarriers. In the LTE and NR systems, a cell in a base station using a primary carrier is referred to a primary cell (PCell), and a subcarrier is referred to as a secondary cell (SCell). A technology for extending the CA function to two base stations is referred to as dual connectivity (hereinafter referred to as DC). In the DC, the UE uses a master station (master E-UTRAN NodeB, hereinafter referred to as a MeNB) and a secondary base station (secondary E-UTRAN NodeB, hereinafter referred to as a SeNB) by simultaneously connecting the two base stations. Cells belonging to the MeNB are referred to as a master cell group (hereinafter referred to as an MCG), and cells belonging to the SeNB are referred to as a secondary cell group (hereinafter referred to as an SCG). There is a representative cell for each cell group. A representative cell of the MCG is referred to as a primary cell (hereinafter referred to as a PCell), and a representative cell of the SCG is referred to as a primary secondary cell (hereinafter referred to as a PSCell). When the above-described NR is used, the MCG may be used as the LTE technology and the SCG may be used as the NR, so that the UE may simultaneously use the LTE and the NR.

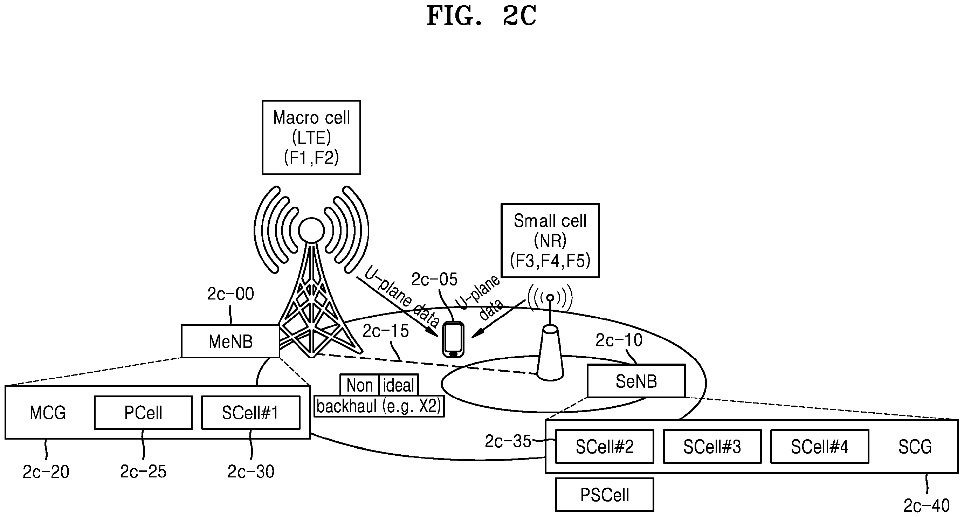

FIG. 2C is a diagram for describing the concept of DC according to some embodiments of the present disclosure.

When the DC is used, the UE may use two base stations by simultaneously connecting the two base stations. FIG. 2C illustrates a case in which a UE 2c-05 transmits and receives data by simultaneously connecting a macro base station 2c-00 using an LTE technology and a small cell base station 2c-10 using an NR technology. The DC of FIG. 2C is referred to as E-UTRAN-NR Dual Connectivity (EN-DC). The macro base station is referred to as a master E-UTRAN NodeB (MeNB) 2c-00, and the small cell base station is referred to as SgNB or secondary 5G NodeB (SeNB) 2c-10. A plurality of small cells may exist in the service area of the MeNB 2c-00, and the MeNB 2c-00 is connected to SgNBs through a wired backhaul network 2c-15. A set of serving cells provided from the MeNB 2c-00 is referred to as an MCG 2c-20. In the MCG 2c-20, one serving cell is necessarily a PCell 2c-25 that has all the functions having been performed by the existing cell, such as connection establishment, connection re-establishment, handover, etc. Also, in the PCell 2c-25, a UL control channel has a PUCCH. Serving cells other than PCell are referred to as SCell 2c-30.

FIG. 2C illustrates a scenario in which the MeNB 2c-00 provides one SCell and the SgNB 2c-10 provides three SCells. A set of serving cells provided by the SgNB is referred to as an SCG 2c-40. When the UE transmits and receives data to and from the two base stations, the MeNB 2c-00 issues, to the SgNB 2c-10, a command for adding, changing, or removing the serving cells provided by the SgNB 2c-10. In order to issue such a command, the MeNB 2c-00 may configure the UE to measure serving cells and neighboring cells. The UE has to report a result of the measuring to the MeNB 2c-00 according to configuration information. In order for the SgNB 2c-10 to efficiently transmit and receive data to and from the UE, a serving cell that plays a similar role to the PCell of the MCG 2c-20 is required. In the present disclosure, this is referred to as a PSCell. The PSCell is one of the serving cells of the SCG 2c-40, and has a PUCCH that is an UL control channel. The PUCCH is used by the UE to transmit HARQ ACK/NACK information, channel status information (CSI), and scheduling request (SR) to the base station.

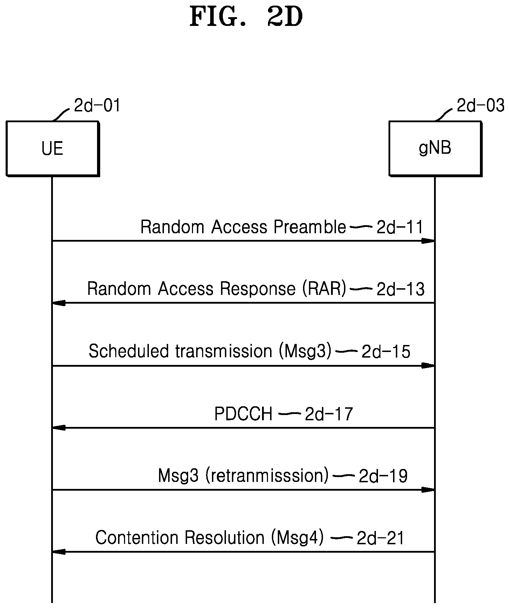

FIG. 2D is a diagram illustrating a random access procedure when asynchronous HARQ is used for a UL, according to some embodiments of the present disclosure.

The UE 2d-01 performs random access by performing the following procedure in various cases requiring initial access, reconnection, handover, and other random access to the base station.

First, for access to a base station 2d-03, a UE 2d-01 transmits a random access preamble to a physical channel for random access (2d-11). The preamble transmitted by the UE may be randomly selected by the UE, or may be a specific preamble designated by the base station.

When the base station receives the preamble, the base station transmits, to the UE, a random access response (hereinafter referred to as RAR) message for the preamble (2d-13). The RAR message may include ID information of the preamble used in operation 2d-11, UL transmission timing correction information, and UL resource assignment information and temporary UE ID information, which are used in subsequent operation (i.e., operation 2d-15). The UL resource assignment information may not include the aforementioned HARQ Process ID and NDI value. Upon random access, the transmission of the resource assigned from the RAR may be scheduled using a fixed HARQ process ID (e.g., 0).

The UE having received the RAR message transmits another message to the resource assigned to the RAR message according to whether initial access, reconnection, handover, or other random access is required (2d-15). For example, when initial connection is required, the UE may transmit an RRCConnectionRequest message, which is a message of an RRC layer. When reconnection is required, the UE may transmit an RRCConnectionReestablishmentRequest message. Upon handover, the UE may transmit an RRCConnectionReconfigurationComplete message. Alternatively, when random access is performed in a connected state (RRC_CONNECTED), the UE may transmit a buffer status report (BSR) message for resource request, the BSR including a C-RNTI MAC CE (control element: control message of MAC layer) including a C-RNTI that is a unique ID of the UE within the base station. Upon random access, messages transmitted after the reception of the RAR are collectively referred to as Msg3.

When data is not received from the resource assigned by the base station through the RAR, the base station may indicate the UE to retransmit the data (2d-17). At this time, UL resource assignment for retransmission can be transmitted through the PDCCH. Information for the allocation may be transmitted by including temporary terminal ID information allocated by the RAR, and including 0 as the HARQ process ID. Accordingly, the UE having received the PDCCH may retransmit the transmitted Msg3 (2d-15) (2d-19).

Thereafter, when the base station receives Msg3, the base station may transmit a contention resolution message indicating that Msg3 has been properly received (2d-21). The contention resolution message may vary according to which message the UE transmits in Msg3. For example, when the message transmitted by the UE in Msg3 is a message transmitted through a common control channel (CCCH), such as RRCConnectionRequest or RRCConnectionReestablishmentRequest, the base station transmits the CCCH message transmitted by the UE in Msg3 as the contention resolution message. When the UE already performs random access in the RRC_CONNECTD state and the C-RNTI MAC CE is included in Msg3, a message for assigning UL resources to the C-RNTI of the UE may be the contention resolution message.

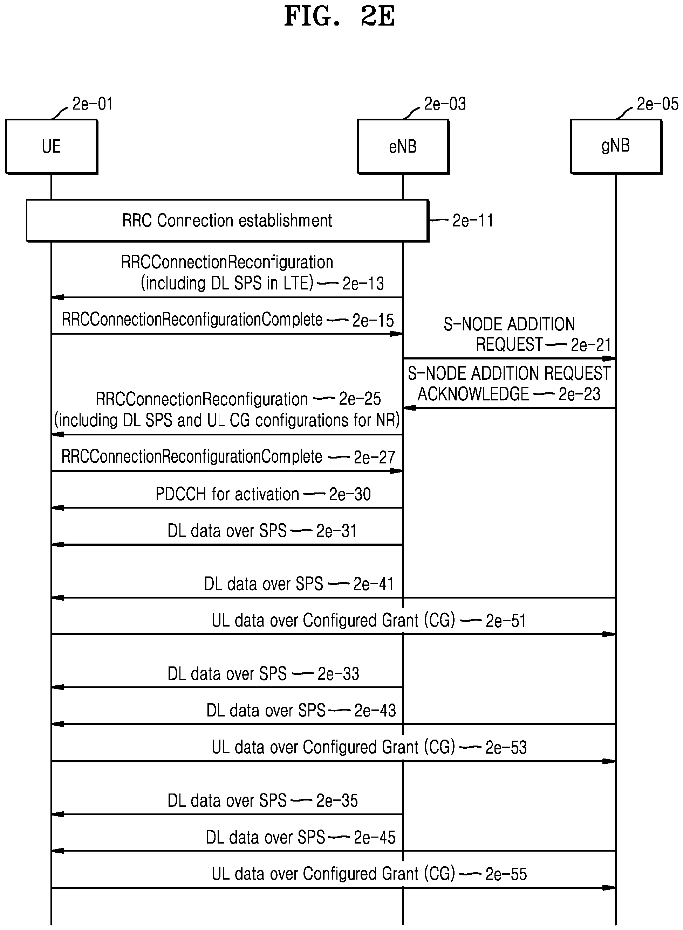

FIG. 2E is a diagram illustrating an example of a message flow between a UE and a base station when a method of determining a UL HARQ process ID is used in EN-DC, according to some embodiments of the present disclosure.

In FIG. 2E, a scenario in which a UE 2e-01 performs a connection procedure to a base station 2e-03 (2e-11), and thus, the UE 2e-01 is connected to the base station 2e-03 is assumed. The connection procedure may include a procedure of performing random access to transmit RRCConnectionRequest to Msg3, receiving an RRCConnectionSetup message, and then transmitting RRCConnectionSetupComplete.

Thereafter, the UE 2e-01 may receive various configurations from the base station 2e-03 according to capabilities supported by the UE 2e-01 (2e-13). The configurations received by the UE may include a procedure of configuring a plurality of serving cells, such as the CA. In FIG. 2E, the base station 2e-03 may transmit, to the UE 2e-01, configuration information for DL semi-persistent scheduling (SPS). The DL SPS is a function of assigning a fixed resource at a set periodicity without PDCCH when configured and activated once so as to reduce PDCCH overhead transmitted by the base station 2e-03 for resource assignment. To this end, the base station 2e-03 may allocate a periodicity for DL resources (semiPersistSchedIntervalDL) and the number of HARQ processes (numberOfConfSPS-Processes) for DL resources to the configuration information.

Thereafter, when the base station 2e-03 activates the configuration information through the PDCCH (2e-30), the UE 2e-01 may receive DL data without PDCCH by repeatedly using the activated resources at a subsequently configured periodicity (2e-31, 2e-33, and 2e-35). The periodically repeated resource may be a resource for new transmission. When an error occurs in data received from the resource for new transmission, an HARQ process ID for each new transmission may be required for retransmission. To this end, when the UE 2e-01 performs DL SPS reception on LTE resources, the HARQ process ID may be calculated using the following Equation 1 for each new transmission resource.

$$\text{HARQ Process ID} = [\text{floor}(CURRENT\_TTI/semiPersistSchedIntervalDL)] \text{ modulo}$$

$$\text{numberOfConfSPS-Processes (Equation 1)}$$

where CURRENT_TTI=[(System frame number* 10) + subframe number].
(System frame number (SFN) increases by 1 every 10 ms and is reset to 0 every 10.24 seconds maximum (value of 0 to $2^{10}-1$); Subframe number increases by 1 every 1 ms within one system frame number (value of 0 to 9)

According to Equation 1, when three HARQ processes (numberOfConfSPS-Processes) are allocated, HARQ process IDs 0, 1, and 2 are repeated for each new resource.

The base station 2e-03 may configure the measurement for the neighboring cells to the UE 2e-01 by RRC configuration. Therefore, when measurement for the neighboring cells is configured to the UE 2e-01, the UE 2e-01 may report a resulting of the measuring the neighboring cells (e.g., LTE cells and NR cells) to the base station 2e-03 according to the configuration. According to the information, when the neighboring cell is the NR cell, the LTE base station 2e-03 may transmit an additional request message to the NR base station 2e-05 for the above-described EN-DC configuration (2e-21), may receive an ACK message from the NR base station 2e-05 (2e-23), and may additionally configure the cell of the NR base station 2e-05 to the UE 2e-01 (2e-25). The configuration information may include information for configuring various functions to the UE 2e-01, such as the above-described RRC configuration of LTE.

In FIG. 2E, a scenario in which DL SPS and UL configured grant (UL CG) resource are configured to the UE 2e-01 in the NR is assumed. The UL CG is a concept in which the above-described DL SPS is applied to the UL. There are two types of UL CG (Type 1, Type 2). Type 1 refers to a resource type that is activated immediately after configuration because detailed resources and periodicity information are included in the RRC configuration message. Type 2 is a resource type that configures only periodicity or the like, as in DL SPS, and activates and deactivates through the PDCCH.

When the base station 2e-03 configures the DL SPS in the NR, periodicity and the number of HARQ processes for this resource (nrofHARQ-Processes) may be configured.

Thereafter, when the base station 2e-03 activates the configuration information through the PDCCH, the UE 2e-01 may receive DL data without PDCCH by repeatedly using the activated resources at a subsequently configured periodicity (2e-41, 2e-43, and 2e-45). The periodically repeated resource may be a resource for new transmission. When an error occurs in data received from the resource for new transmission, an HARQ process ID for each new transmission may be required for retransmission. To this end, when the UE 2e-01 performs DL SPS reception on resources, the HARQ process ID may be calculated using the following Equation 2 for each new transmission resource.

$$\text{HARQ Process ID} = [\text{floor (CURRENT\_slot} \times 10\ /\ (\text{numberOfSlotsPerFrame} \times \text{periodicity}))]\ \text{modulo nrofHARQ-Processes (Equation 2)}$$

where CURRENT_slot = [(SFN $\times$ numberOfSlotsPerFrame) + slot number in the frame] and numberOfSlotsPerFrame refers to the number of consecutive slots per frame

According to Equation 2, when three HARQ processes (nrofHARQ-Processes) are allocated, HARQ process IDs 0, 1, and 2 are repeated for each new resource.

Also, when the base station 2e-03 configures the UL CG in the NR (Type 1, Type 2), periodicity and the number of HARQ processes for this resource (nrofHARQ-Processes) are configured.

Thereafter, in the case of Type 1, the UL resource may be activated immediately when the UL resource is configured, and in the case of Type 2, the UL resource may be activated when the UE 2e-01 receives the PDCCH. When the UL resource is activated, the UE 2e-01 may transmit UL data without PDCCH by repeatedly using the activated resource at a subsequently configured periodicity (2e-51, 2e-53, and 2e-55). The periodically repeated resource may be a resource for new transmission. When an error occurs in data received from the resource for new transmission, an HARQ process ID for each new transmission may be required in order for the base station to request retransmission. To this end, when the UE 2e-01 performs transmission on NR UL CG resources, the HARQ process ID may be calculated using the following Equation 3 for each new transmission resource.

$$\text{HARQ Process ID} = \{[\text{floor(CURRENT\_symbol/periodicity)}]\ \text{modulo nrofHARQ-Processes}\} + 1\ (\text{Equation 3})$$

where CURRENT_symbol=(SFN $\times$ numberOfSlotsPerFrame $\times$ numberOfSymbolsPerSlot + slot number in the frame $\times$ numberOfSymbolsPerSlot + symbol number in the slot), and numberOfSlotsPerFrame and numberOfSymbolsPerSlot refer to the number of consecutive slots per frame and the number of consecutive symbols per slot

According to Equation 3, when three HARQ processes (nrofHARQ-Processes) are allocated, HARQ process IDs 1, 2, and 3 are repeated for each new resource. As described above with reference to FIG. 2D, when the UE 2e-01 performs random access, collision is avoided by using the HARQ process for Msg3 as a fixed value (0).

Also, in the NR, the maximum number of UL HARQ processes is 16 (i.e., HARQ process ID is 0 to 15). When the base station sets the nrofHARQ-Processes value to 16, the HARQ process ID used for UL CG may use a value of 1 to 16. Because a case in which the HARQ process ID is 16 is not supported, a value of 0 may be used when the HARQ process ID is 16. This may be supported by updating Equation 3 as follows.

$$\text{HARQ Process ID} = \{[\text{floor(CURRENT\_symbol/periodicity)}]\ \text{modulo nrofHARQ-Processes} + 1\}\ \text{modulo 'number of UL HARQ processes configured for this serving cell'}$$

where number of UL HARQ processes configured for this serving cell is 16.

Therefore, the UE 2e-01 may perform DL data reception and UL transmission according to Equations 1 to 3. When re-reception or retransmission is required, the HARQ process ID calculated when the base station assigns resources for re-reception/retransmission over the PDCCH is included, so that communication may be performed while distinguishing for which transmission/reception the retransmission/re-reception is.

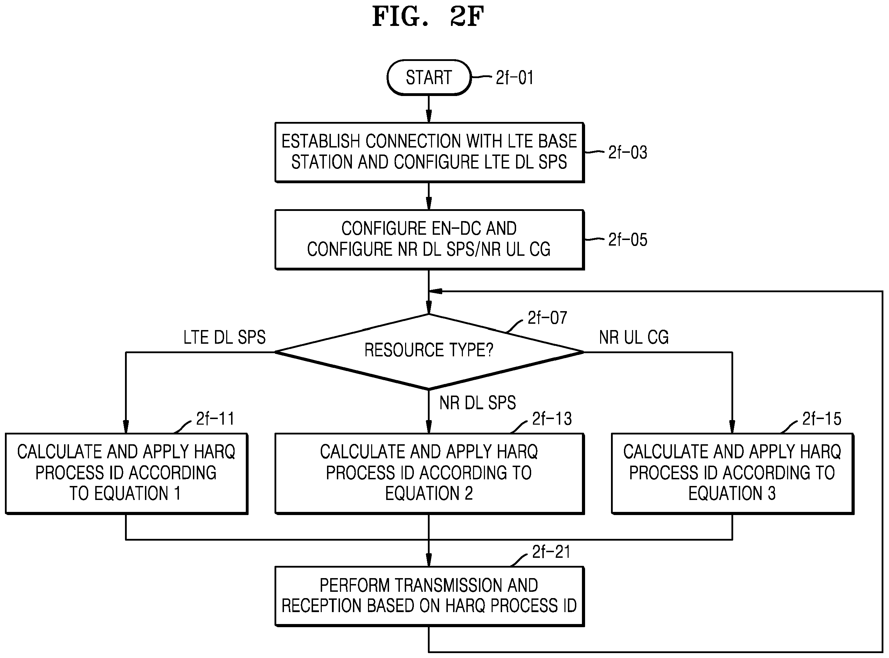

FIG. 2F is a diagram illustrating an operation sequence of a UE when a method of determining an UL HARQ process ID is used in EN-DC.

In FIG. 2F, a scenario in which the UE performs a connection procedure to an LTE base station so that DL-SPS is configured (2f-03), EN-DC is configured from the base station, and DL SPS and UL CG are configured from an NR cell (2f-05) is assumed.

Thereafter, when the resource configured from the base station to the UE is activated, the UE determines the type of the configured resource (2f-07).

When the UE receives DL SPS on LTE resources, the HARQ process ID is calculated using the following Equation 1 with respect to each new transmission resource (2f-11).

$$\text{HARQ Process ID} = [\text{floor(CURRENT\_TTI/semiPersistSchedIntervalDL)}] \text{ modulo numberOfConfSPS-Processes (Equation 1)}$$

where CURRENT_TTI=[(System frame number* 10) + subframe number].

(System frame number (SFN) increases by 1 every 10 ms and is reset to 0 every 10.24 seconds maximum (value of 0 to $2^{10}$-1); Subframe number increases by 1 every 1 ms within one system frame number (value of 0 to 9)

According to Equation 1, when three HARQ processes (numberOfConfSPS-Processes) are allocated, HARQ process IDs 0, 1, and 2 are repeated for each new resource.

When the UE receives DL SPS on NR resources, the HARQ process ID is calculated using the following Equation 2 with respect to each new transmission resource (2f-13).

$$\text{HARQ Process ID} = [\text{floor (CURRENT\_slot} \times 10 \text{ / (numberOfSlotsPerFrame} \times \text{periodicity))}] \text{ modulo nrofHARQ-Processes (Equation 2)}$$

where CURRENT_slot = [(SFN $\times$ numberOfSlotsPerFrame) + slot number in the frame] and numberOfSlotsPerFrame refers to the number of consecutive slots per frame

According to Equation 2, when three HARQ processes (nrofHARQ-Processes) are allocated, HARQ process IDs 0, 1, and 2 are repeated for each new resource.

When the UE performs transmission on NR UL CG resources, the HARQ process ID is calculated using the following Equation 3 with respect to each new transmission resource (2f-15).

$$\text{HARQ Process ID} = \{[\text{floor(CURRENT\_symbol/periodicity)}] \text{ modulo nrofHARQ-Processes}\} + 1 \text{ (Equation 3)}$$

where CURRENT_symbol=(SFN $\times$ numberOfSlotsPerFrame $\times$ numberOfSymbolsPerSlot + slot number in the frame $\times$ numberOfSymbolsPerSlot + symbol number in the slot), and numberOfSlotsPerFrame and numberOfSymbolsPerSlot refer to the number of consecutive slots per frame and the number of consecutive symbols per slot

According to Equation 3, when three HARQ processes (nrofHARQ-Processes) are allocated, HARQ process IDs 1, 2, and 3 are repeated for each new resource. As described above with reference to FIG. 2D, when the UE performs random access, collision is avoided by using the HARQ process for Msg3 as a fixed value (0).

Also, in the NR, the maximum number of UL HARQ processes is 16 (i.e., HARQ process ID is 0 to 15). When the base station sets the nrofHARQ-Processes value to 16, the HARQ process ID used for UL CG may use a value of 1 to 16. Because a case in which the HARQ process ID is 16 is not supported, a value of 0 may be used when the HARQ process ID is 16. This may be supported by updating Equation 3 as follows.

$$\text{HARQ Process ID} = \{[\text{floor(CURRENT\_symbol/periodicity)}] \text{ modulo nrofHARQ-Processes} + 1\} \text{ modulo 'number of UL HARQ processes configured for this serving cell'}$$

where number of UL HARQ processes configured for this serving cell is 16.

Therefore, the UE may perform DL data reception and UL transmission according to Equations 1 to 3. When re-reception or retransmission is required, the HARQ process ID calculated when the base station assigns resources for re-reception/retransmission over the PDCCH is included, so that communication may be performed while distinguishing for which transmission/reception the retransmission/re-reception is (2f-21).

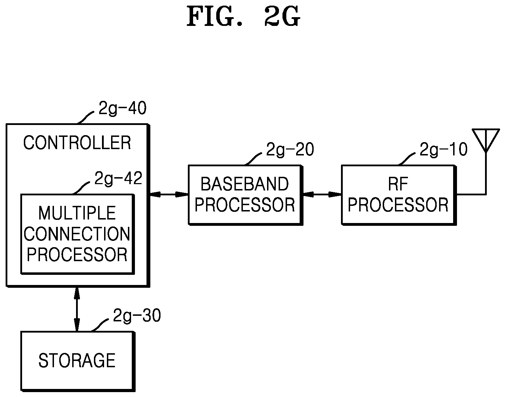

FIG. 2G is a diagram illustrating an architecture of a UE in the wireless communication system, according to some embodiments of the present disclosure.

Referring to FIG. 2G, the UE may include an RF processor 2g-10, a baseband processor 2g-20, a storage 2g-30, and a controller 2g-40. Of course, the present disclosure is not limited to the above example, and the UE may include fewer elements or more elements than the elements illustrated in FIG. 2G.

Also, the UE in the wireless communication system of FIG. 2G may correspond to the configuration of the UE of FIG. 1L. For example, the RF processor 2g-10 of FIG. 2G may correspond to the RF processor 1l-10 of FIG. 1L, and the baseband processor 2g-20 of FIG. 2G may correspond to the baseband processor 1l-20 of FIG. 1L. Also, the storage 2g-30 of FIG. 2G may correspond to the storage 1l-30 of FIG. 1L, and the controller 2g-40 of FIG. 2G may correspond to the controller 1l-40 of FIG. 1L.

The RF processor 2g-10 may perform functions for transmitting and receiving signals through a radio channel, such as signal band conversion, amplification, etc. That is, the RF processor 2g-10 may up-convert a baseband signal provided from the baseband processor 2g-20 into an RF band signal and transmit the RF band signal through an antenna, and may down-convert an RF band signal received through an antenna into a baseband signal. For example, the RF processor 2g-10 may include a transmission filter, a reception filter, an amplifier, a mixer, an oscillator, a DAC, an ADC, and the like. Although only one antenna is illustrated in FIG. 2G, the UE may include a plurality of antennas. Also, the RF processor 2g-10 may include a plurality of RF chains. Furthermore, the RF processor 2g-10 may perform beamforming. For beamforming, the RF processor 2g-10 may adjust the phases and magnitudes of signals transmitted and received through a plurality of antennas or antenna elements. Also, the RF processor 2g-10 may perform MIMO and may receive a plurality of layers when performing the MIMO. The RF processor 2g-10 may perform reception beam sweeping by appropriately setting a plurality of antennas or antenna elements under the control of the controller 2g-40, or may adjust the direction and beam width of the reception beam so that the reception beam is cooperated with transmission beam.

The baseband processor 2g-20 may perform a conversion function between a baseband signal and a bit string according to a physical layer standard of a system. For example, upon transmission of data, the baseband processor 2g-20 may encode and modulate a transmission bit string to generate complex symbols. Also, upon reception of data, the baseband processor 2g-20 may reconstruct the reception bit string by demodulating and decoding the baseband signal provided from the RF processor 2g-10. For example, in the case of conforming to an OFDM scheme, upon transmission of data, the baseband processor 2g-20 may encode and modulate the transmission bit string to generate complex symbols, map the complex symbols to sub-carriers, and configure OFDM symbols through an IFFT operation and CP insertion. Also, upon reception of data, the baseband processor 2g-20 may segment the baseband signal provided from the RF processor 2g-10 into OFDM symbol units, reconstruct signals mapped to sub-carriers through an FFT operation, and reconstruct a reception bit string through demodulation and decoding.

The baseband processor 2g-20 and the RF processor 2g-10 may transmit and receive signals as described above. Therefore, the baseband processor 2g-20 and the RF processor 2g-10 may be referred to as a transmitter, a receiver, a transceiver, or a communicator. Furthermore, at least one of the baseband processor 2g-20 and the RF processor 2g-10 may include a plurality of communication modules so as to support a plurality of different radio access technologies. Also, at least one of the baseband processor 2g-20 and the RF processor 2g-10 may include different communication modules so as to process signals of different frequency bands. For example, the different radio access technologies may include a wireless LAN (e.g., IEEE 802.11), a cellular network (e.g., LTE), etc. Also, the different frequency bands may include a super high frequency (SHF) (e.g., 2.5 GHz or 5 GHz) band and a millimeter wave (e.g., 60 GHz) band. The UE may transmit and receive signals to and from the base station using the baseband processor 2g-20 and the RF processor 2g-10, and the signals may include control information and data.

The storage 2g-30 may store data such as basic programs, application programs, and configuration information for the operations of the UE. In particular, the storage 2g-30 may store information related to a wireless LAN node that performs wireless communication using a wireless LAN access technology. The storage 2g-30 may provide stored data in response to the request of the controller 2g-10. The storage 2g-30 may include a storage medium such as ROM, RAM, hard disk, CD-ROM, and DVD, or any combination thereof. Also, the storage 2g-30 may include a plurality of memories. The controller 2g-40 may control overall operations of the UE. For example, the controller 2g-40 may transmit and receive signals through the baseband processor 2g-20 and the RF processor 2g-10. Also, the controller 2g-40 may record data in the storage 2g-40 and read data from the storage 2g-40. To this end, the controller 2g-40 may include at least one processor. For example, the controller 2g-40 may include a CP that performs control for communication, and an AP that controls an upper layer, such as an application program. Further, according to some embodiments of the present disclosure, the controller 2g-40 may include a multiple connection processor 2g-42 that performs a process of operating in a multiple connection mode. For example, the controller 2g-40 may control the UE to perform a procedure illustrated in the operations of the UE illustrated in FIGS. 2D to 2F.

The controller 2g-40 according to an embodiment of the present disclosure may determine the HARQ process ID using the above-described method according to the UL transmission resource and perform data transmission using the HARQ process ID.

The methods according to the embodiments of the present disclosure, which are described in the claims or the specification, may be implemented as hardware, software, or a combination of hardware and software.

When implemented as software, a computer-readable storage medium storing one or more programs (software modules) may be provided. One or more programs stored in the computer-readable storage medium are configured to be executable by one or more processors in an electronic device. One or more programs include instructions that cause the electronic device to execute the methods according to the embodiments of the present disclosure, which are described in the claims or the specification of the present disclosure.

One or more programs (software modules, software, etc.) may be stored in RAM, non-volatile memory including flash memory, ROM, electrically erasable programmable read only memory (EEPROM), magnetic disc storage device, CD-ROM, DVD, other types of optical storage devices, or magnetic cassette. Alternatively, one or more programs may be stored in a memory provided by a combination of all or part of these devices. Also, each memory may include a plurality of configured memories.

Also, one or more programs may be stored in an attachable storage device that is accessible through a communication network such as Internet, intranet, local area network (LAN), wide LAN (WLAN), or storage area network (SAN), or communication network provided by a combination thereof. These storage devices may be connected through an external port to a device that performs the embodiments of the present disclosure. Also, a separate storage on the communication network may access the device that performs the embodiment of the present disclosure.

In specific embodiments of the present disclosure, the elements included in the present disclosure have been expressed in the singular or plural form according to the suggested specific embodiments of the present disclosure. However, the expression in the singular or plural form is appropriately selected according to the suggested situations for convenience of explanation and is not intended to limit the present disclosure to the single or plural elements. Even when a certain element is expressed in the plural form, it may be provided with a single element, and even when a certain element is expressed in the singular form, it may be provided with a plurality of elements.

Although specific embodiments have been described in the detailed description of the present disclosure, various modifications may be made without departing from the scope of the present disclosure. Therefore, the scope of the present disclosure should not be limited to the above-described embodiments of the present disclosure and should be determined by the appended claims.

## Claims

1. A method of a first integrated access backhaul, IAB, node in a wireless communication system, the method comprising:

   establishing a signaling radio bearer, SRB (1h-31, 1h-21);
   establishing a backhaul adaptation entity as an upper layer entity (1g-01, 1g-10, 1g-15) of a radio link control, RLC, entity;
   mapping (1g-10), by the backhaul adaptation entity, a RLC channel corresponding to data;
   adding, by the backhaul adaptation entity, a header including identification information for routing and address information of a donor IAB node to the data; and
   transmitting (1g-10) the data to a second IAB node based on the mapped RLC channel,
   wherein the backhaul adaptation entity is not configured for the SRB (1h-31, 1h-21) and a packet data convergence protocol, PDCP, is configured for the SRB (1h-31, 1h-21).

2. The method of claim 1, further comprising performing, by the PDCP entity, at least one of ciphering, deciphering, integrity protection, or integrity verification corresponding to the established SRB.

3. The method of claim 1, wherein the mapping of the RLC channel comprises mapping, by the backhaul adaptation entity, the RLC channel corresponding to the data based on quality of service, QoS, information.

4. The method of claim 1, further comprising receiving the data from a third IAB node via a RLC channel or from a user equipment, UE.

5. The method of claim 4, wherein the second IAB node is a parent IAB node of the first IAB node and the third IAB node is a child IAB node of the first IAB node.

6. A first integrated access backhaul, IAB, node in a wireless communication system, the first IAB node comprising:

   a communicator; and

at least one controller connected to the communicator, wherein the at least one controller is configured to:

establish a signaling radio bearer, SRB (1h-31, 1h-21);
establish a backhaul adaptation entity as an upper layer entity (1g-01, 1g-10, 1g-15) of a radio link control, RLC, entity;
map (1g-10), by the backhaul adaptation entity, a RLC channel corresponding to data;
add, by the backhaul adaptation entity, a header including identification information for routing and address information of a donor IAB node to the data; and
transmit (1g-10) the data to a second IAB node based on the mapped RLC channel,
wherein the backhaul adaptation entity is not configured for the SRB (1h-31, 1h-21) and a packet data convergence protocol, PDCP, is configured for the SRB (1h-31, 1h-21).

7. The first radio node of claim 6, wherein the at least one controller is further configured to perform, by the PDCP entity, at least one of ciphering, deciphering, integrity protection, or integrity verification corresponding to the established SRB.

8. The first IAB node of claim 6, wherein the at least one controller is further configured to map, by the backhaul adaptation entity, the RLC channel corresponding to the data based on quality of service, QoS, information.

9. The first IAB node of claim 6, wherein the at least one controller is further configured to receive the data from a third IAB node via a RLC channel or from a user equipment, UE.

10. The first IAB node of claim 9, wherein the second IAB node is a parent IAB node of the first IAB node and the third IAB node is a child IAB node of the first IAB node.

**Patentansprüche**

1. Verfahren für einen ersten integrierten Zugangs-Backhaul-IAB-Knoten in einem drahtlosen Kommunikationssystem, wobei das Verfahren umfasst:

Einrichten eines Signalisierungsfunkträgers, SRB (1h-31, 1h-21);
Einrichten einer Backhaul-Anpassungseinheit als Einheit der oberen Schicht (1g-01, 1g-10, 1g-15) einer Funkverbindungssteuerungs-RLC-Einheit;
Abbilden (1g-10) eines den Daten entsprechenden RLC-Kanals durch die Backhaul-Anpassungseinheit;
Hinzufügen, durch die Backhaul-Anpassungseinheit, eines Headers, der Identifikationsinformationen zum Routen und Adressinformationen eines Donor-IAB-Knotens enthält, zu den Daten; und
Übertragen (1g-10) der Daten an einen zweiten IAB-Knoten auf der Grundlage des abgebildeten RLC-Kanals, wobei die Backhaul-Anpassungseinheit nicht für den SRB (1h-31, 1h-21) konfiguriert ist und ein Paketdatenkonvergenzprotokoll, PDCP, für den SRB (1h-31, 1h-21) konfiguriert ist.

2. Verfahren nach Anspruch 1, ferner umfassen Durchführen, durch die PDCP-Einheit, von mindestens einem von Verschlüsselung, Entschlüsselung, Integritätsschutz oder Integritätsüberprüfung entsprechend dem festgelegten SRB.

3. Verfahren nach Anspruch 1, wobei das Abbilden des RLC-Kanals das Abbilden des RLC-Kanals, der den Daten entspricht, durch die Backhaul-Anpassungseinheit auf der Grundlage von Dienstqualitätsinformationen (QoS) umfasst.

4. Verfahren nach Anspruch 1, das ferner das Empfangen der Daten von einem dritten IAB-Knoten über einen RLC-Kanal oder von einem Benutzergerät (UE) umfasst.

5. Verfahren nach Anspruch 4, wobei der zweite IAB-Knoten ein übergeordneter IAB-Knoten des ersten IAB-Knotens ist und der dritte IAB-Knoten ein untergeordneter IAB-Knoten des ersten IAB-Knotens ist.

6. Erster integrierter Zugangs-Backhaul-IAB-Knoten in einem drahtlosen Kommunikationssystem, wobei der erste IAB-Knoten umfasst:

einen Kommunikator; und

mindestens eine Steuerung, die mit dem Kommunikator verbunden ist, wobei die mindestens eine Steuerung konfiguriert ist, um:

einen Signalisierungsfunkträger, SRB (1h-31, 1h-21), einzurichten;
eine Backhaul-Anpassungseinheit als Einheit der oberen Schicht (1g-01, 1g-10, 1g-15) einer Funkverbindungssteuerungs-RLC-Einheit einzurichten;
durch die Backhaul-Anpassungseinheit, einen RLC-Kanal, der den Daten entspricht abzubilden (1g-10),;
durch die Backhaul-Anpassungseinheit einen Header, der Identifikationsinformationen zum Routen und Adressinformationen eines Donor-IAB-Knotens enthält, zu den Datenhinzuzufügen; und
die Daten an einen zweiten IAB-Knoten auf der Grundlage des zugeordneten RLC-Kanals zu übertragen (1g-10),
wobei die Backhaul-Anpassungseinheit nicht für den SRB (1h-31, 1h-21) konfiguriert ist und ein Paketdatenkonvergenzprotokoll, PDCP, für den SRB (1h-31, 1h-21) konfiguriert ist.

7. Eerster Funkknoten nach Anspruch 6, wobei die mindestens eine Steuerung ferner so konfiguriert ist, dass sie durch die PDCP-Einheit mindestens eines von Verschlüsselung, Entschlüsselung, Integritätsschutz oder Integritätsüberprüfung entsprechend dem eingerichteten SRB durchführt.

8. Erster IAB-Knoten nach Anspruch 6, wobei die mindestens eine Steuerung ferner so konfiguriert ist, dass sie durch die Backhaul-Anpassungseinheit den RLC-Kanal, der den Daten entspricht, auf der Grundlage von Dienstqualitätsinformationen (QoS) abbildet.

9. Erster IAB-Knoten nach Anspruch 6, wobei die mindestens eine Steuerung ferner so konfiguriert ist, dass sie die Daten von einem dritten IAB-Knoten über einen RLC-Kanal oder von einem Benutzergerät (UE) empfängt.

10. Erster IAB-Knoten nach Anspruch 9, wobei der zweite IAB-Knoten ein übergeordneter IAB-Knoten des ersten IAB-Knotens ist und der dritte IAB-Knoten ein untergeordneter IAB-Knoten des ersten IAB-Knotens ist.

**Revendications**

1. Procédé d'un premier noeud de liaison terrestre à accès intégré, IAB, dans un système de communication sans fil, le procédé comprenant :

établir un support radio de signalisation, SRB (1h-31, 1h-21) ;
établir une entité d'adaptation de liaison terrestre en tant qu'entité de couche supérieure (1g-01, 1g-10, 1g-15) d'une entité de commande de liaison radio, RLC ;
mapper (1g-10), par l'entité d'adaptation de la liaison terrestre, un canal RLC correspondant à des données ;
ajouter, par l'entité d'adaptation de la liaison terrestre, un en-tête comprenant des informations d'identification pour le routage et des informations d'adresse d'un noeud IAB donneur aux données ; et
transmettre (1g-10) les données à un deuxième noeud IAB sur la base du canal RLC mappé,
dans lequel l'entité d'adaptation de liaison terrestre n'est pas configurée pour le SRB (1h-31, 1h-21) et un protocole de convergence de données par paquets, PDCP, est configuré pour le SRB (1h-31, 1h-21).

2. Procédé selon la revendication 1, comprenant en outre l'exécution, par l'entité PDCP, d'au moins l'un des éléments suivants : chiffrage, déchiffrage, protection de l'intégrité ou vérification de l'intégrité correspondant au SRB établi.

3. Procédé selon la revendication 1, dans lequel le mappage du canal RLC comprend le mappage, par l'entité d'adaptation de liaison terrestre, du canal RLC correspondant aux données sur la base d'informations de qualité de service, QoS.

4. Procédé selon la revendication 1, comprenant en outre la réception des données depuis un troisième noeud IAB via un canal RLC ou depuis un équipement d'utilisateur, UE.

5. Procédé selon la revendication 4, dans lequel le deuxième noeud IAB est un noeud IAB parent du premier noeud IAB et le troisième noeud IAB est un noeud IAB enfant du premier noeud IAB.

**6.** Premier noeud de liaison terrestre à accès intégré, IAB, dans un système de communication sans fil, le premier noeud IAB comprenant :

un communicateur ; et
au moins une commande connectée au communicateur, dans laquelle l'au moins une commande est configurée pour :

établir un support radio de signalisation, SRB (1h-31, 1h-21) ;
établir une entité d'adaptation de liaison terrestre en tant qu'entité de couche supérieure (1g-01, 1g-10, 1g-15) d'une entité de commande de liaison radio, RLC ;
mapper (1g-10), par l'entité d'adaptation de liaison terrestre, un canal RLC correspondant à des données ;
ajouter, par l'entité d'adaptation de liaison terrestre, un en-tête comprenant des informations d'identification pour le routage et des informations d'adresse d'un noeud IAB donneur aux données ; et
transmettre (1g-10) les données à un deuxième noeud IAB sur la base du canal RLC mappé,
dans lequel l'entité d'adaptation de liaison terrestre n'est pas configurée pour le SRB (1h-31, 1h-21) et un protocole de convergence de données par paquets, PDCP, est configuré pour le SRB (1h-31, 1h-21).

**7.** Premier noeud radio selon la revendication 6, dans lequel l'au moins une commande est en outre configurée pour exécuter, par l'entité PDCP, au moins l'un des éléments suivants : chiffrage, déchiffrage, protection d'intégrité ou vérification d'intégrité correspondant au SRB établi.

**8.** Premier noeud IAB selon la revendication 6, dans lequel l'au moins une commande est en outre configurée pour mapper, par l'entité d'adaptation de liaison terrestre, le canal RLC correspondant aux données sur la base d'informations de qualité de service, QoS.

**9.** Premier noeud IAB selon la revendication 6, dans lequel l'au moins une commande est en outre configurée pour recevoir les données depuis un troisième noeud IAB via un canal RLC ou depuis un équipement d'utilisateur, UE.

**10.** Premier noeud IAB selon la revendication 9, dans lequel le deuxième noeud IAB est un noeud IAB parent du premier noeud IAB et le troisième noeud IAB est un noeud IAB enfant du premier noeud IAB.

# FIG. 1A

EP 3 826 357 B1

# FIG. 1B

# FIG. 1C

# FIG. 1D

# FIG. 1E

EP 3 826 357 B1

# FIG. 1F

```
┌──────────────┐                              ┌──────────────┐
│  UE or Child │                              │Parent IAB node│
│   IAB node   │                              │ or IAB Donor │
└──────┬───────┘                              └──────┬───────┘
       │         RRCConnectionRelease ── 1f-01       │
       │◄────────────────────────────────────────────│
       │         RRCConnectionRequest ── 1f-05        │
       │────────────────────────────────────────────►│
       │         RRCConnectionSetup ── 1f-10          │
       │◄────────────────────────────────────────────│
       │      RRCConnectionSetupComplete ── 1f-15     │
       │────────────────────────────────────────────►│
       │         SecurityModeCommand ── 1f-20         │
       │◄────────────────────────────────────────────│
       │         SecurityModeComplete ── 1f-25        │
       │────────────────────────────────────────────►│
       │     RRCConnetionReconfiguration ── 1f-30     │
       │◄────────────────────────────────────────────│
       │  RRCConnectionReconfiguratonComplete ── 1f-35│
       │────────────────────────────────────────────►│
       │           Data transfer ── 1f-40             │
       │◄────────────────────────────────────────────►│
       │     RRCConnetionReconfiguration ── 1f-45     │
       │◄────────────────────────────────────────────│
       │                                              │
```

# FIG. 1G

# FIG. 1H

EP 3 826 357 B1

FIG. 1I

| | | | | PDCP PDU |
|---|---|---|---|---|

1i-10 —

| | ADAP header | PDCP PDU |
|---|---|---|

1i-01 —

| | RLC header | RLC SDU |
|---|---|---|

| MAC header | RLC header | RLC SDU |
|---|---|---|

1i-21 1i-22 1i-23 1i-24

1i-20 —

| Common header | Dedicated header | PDCP PDU | Dedicated header | PDCP PDU | Dedicated header | PDCP PDU |
|---|---|---|---|---|---|---|

1i-02 —

| RLC header | RLC SDU |
|---|---|

| MAC header | RLC header | RLC SDU |
|---|---|---|

1i-31 1i-32 1i-33 1i-34

1i-30 —

| Common header | Dedicated header | Dedicated header | Dedicated header | PDCP PDU | PDCP PDU | PDCP PDU |
|---|---|---|---|---|---|---|

1i-03 —

| RLC header | RLC SDU |
|---|---|

| MAC header | RLC header | RLC SDU |
|---|---|---|

1i-41 1i-42 1i-43 1i-44 1i-45 1i-46 1i-47

1i-40 —

| Common header | Dedicated header | PDCP PDU | Dedicated header | PDCP PDU | Dedicated header | PDCP PDU | Common header | Dedicated header | PDCP PDU | Dedicated header | PDCP PDU |
|---|---|---|---|---|---|---|---|---|---|---|---|

1i-04 —

| RLC header | RLC SDU |
|---|---|

| MAC header | RLC header | RLC SDU |
|---|---|---|

EP 3 826 357 B1

**FIG. 1J**

# FIG. 1K

```
      ( RADIO NODE )──1k-01
            │
            ▼
┌──────────────────────────┐
│   RECEIVE RRC MESSAGE     │──1k-05
└──────────────────────────┘
            │
            ▼
┌──────────────────────────┐
│ CONFIGURE ADAP LAYER ENTITY │──1k-10
└──────────────────────────┘
            │
            ▼
┌──────────────────────────┐
│ GENERATE HEADER AND PERFORM │──1k-15
│ DATA CONCATENATION FUNCTION │
└──────────────────────────┘
            │
            ▼
┌──────────────────────────┐
│ TRANSMIT CONCATENATED DATA │──1k-20
│      TO LOWER LAYER       │
└──────────────────────────┘
```

# FIG. 1L

CONTROLLER — 1I-40

MULTIPLE CONNECTION PROCESSOR — 1I-42

BASEBAND PROCESSOR — 1I-20

RF PROCESSOR — 1I-10

STORAGE — 1I-30

# FIG. 1M

RF PROCESSOR — 1m-10

BASEBAND PROCESSOR — 1m-20

CONTROLLER — 1m-50

MULTIPLE CONNECTION PROCESSOR — 1m-52

COMMUNICATOR — 1m-30

STORAGE — 1m-40

# FIG. 2A

# FIG. 2B

UE

| | |
|---|---|
| PDCP | — 2b-05 |
| RLC | — 2b-10 |
| MAC | — 2b-15 |
| PHY | — 2b-20 |

ENB

| | |
|---|---|
| PDCP | — 2b-40 |
| RLC | — 2b-35 |
| MAC | — 2b-30 |
| PHY | — 2b-25 |

# FIG. 2C

# FIG. 2D

# FIG. 2E

# FIG. 2F

START — 2f-01

ESTABLISH CONNECTION WITH LTE BASE STATION AND CONFIGURE LTE DL SPS — 2f-03

CONFIGURE EN-DC AND CONFIGURE NR DL SPS/NR UL CG — 2f-05

RESOURCE TYPE? — 2f-07

LTE DL SPS

NR UL CG

NR DL SPS

CALCULATE AND APPLY HARQ PROCESS ID ACCORDING TO EQUATION 1 — 2f-11

CALCULATE AND APPLY HARQ PROCESS ID ACCORDING TO EQUATION 2 — 2f-13

CALCULATE AND APPLY HARQ PROCESS ID ACCORDING TO EQUATION 3 — 2f-15

PERFORM TRANSMISSION AND RECEPTION BASED ON HARQ PROCESS ID — 2f-21

EP 3 826 357 B1

# FIG. 2G

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CATT.** Control Plane Considerations for L2 IAB Architectures. *3GPP DRAFT, R2-1809819*
- **QUALCOMM INC (RAPPORTEUR.** CP issues for architecture group 1. *3GPP DRAFT, R2-1809011*

- **HUAWEI.** Control plane protocols for architecture group 1. *3GPP DRAFT, R3-184347*